(19) Europäisches Patentamt
European Patent Office
Office européen des brevets

(11) EP 1 960 450 B1

# (12) EUROPEAN PATENT SPECIFICATION

(45) Date of publication and mention of the grant of the patent:
**08.02.2012 Bulletin 2012/06**

(21) Application number: **06849044.0**

(22) Date of filing: **06.12.2006**

(51) Int Cl.:
***C08G 18/32*** *(2006.01)* ***C08G 18/38*** *(2006.01)*
***C08G 18/10*** *(2006.01)* ***C08G 18/12*** *(2006.01)*
***G02B 1/04*** *(2006.01)*

(86) International application number:
**PCT/US2006/046634**

(87) International publication number:
**WO 2007/078549 (12.07.2007 Gazette 2007/28)**

## (54) SULFUR-CONTAINING POLYURETHANES AND SULFUR-CONTAINING POLYURETHANE (UREAS) AND METHODS OF PREPARATION

SCHWEFELHALTIGE POLYURETHANE UND SCHWEFELHALTIGE POLYURETHAN (HARNSTOFFE) SOWIE ZUBEREITUNGSVERFAHREN

POLYURETHANES CONTENANT DU SOUFRE ET POLYURETHANES-UREES CONTENANT DU SOUFRE ET PROCEDES DE PREPARATION

(84) Designated Contracting States:
**FR**

(30) Priority: **16.12.2005 US 303671**
**16.12.2005 US 303892**

(43) Date of publication of application:
**27.08.2008 Bulletin 2008/35**

(60) Divisional application:
**10006993.9 / 2 236 536**

(73) Proprietor: **PPG Industries Ohio, Inc.**
**Cleveland, OH 44111 (US)**

(72) Inventors:
- **BOJKOVA, Nina V.**
**Monroeville, Pennsylvania 15146 (US)**
- **ROBINSON, Daryl J.**
**Monroeville, Pennsylvania 15146 (US)**
- **RUKAVINA, Thomas G.**
**New Kensington, Pennsylvania 15068 (US)**

(74) Representative: **Polypatent**
**Braunsberger Feld 29**
**51429 Bergisch Gladbach (DE)**

(56) References cited:
**EP-A- 0 780 413** **WO-A-03/042270**
**WO-A-03/044070** **US-A- 4 101 529**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 960 450 B1

Printed by Jouve, 75001 PARIS (FR)

## Description

The present invention relates to sulfur-containing polyurethanes and sulfur-containing polyurethane(ureas) and methods for their preparation.

A number of organic polymeric materials, such as plastics, have been developed as alternatives and replacements for glass in applications such as optical lenses, fiber optics, windows and automotive, nautical and aviation transparencies. These polymeric materials can provide advantages relative to glass, including, shatter resistance, lighter weight for a given application, ease of molding and ease of dying. However, the refractive indices of many polymeric materials are generally lower than that of glass. In ophthalmic applications, the use of a polymeric material having a lower refractive index will require a thicker lens relative to a material having a higher refractive index. A thicker lens is not desirable.

Thus, there is a need in the art to develop a polymeric material having at least one of the following properties: an adequate refractive index, light weight/low density, good impact resistance/strength, good optical clarity, good rigidity/hardness, good thermal properties, and ease in processing of optical lenses made from said material.

WO 03/044070 relates to a sulfur-containing polyureaurethane and a method for preparing said polyureaurethane which, when at least partially cured, can have a refractive index of at least 1.57, an Abbé number of at least 35, and a density of less than 1.3 grams/$cm^3$. The sulfur-containing polyurethane can be prepared by reacting a polyureaurethane prepolymer comprising a polycyanate and at least one hydrogen-containing material, at least one episulfide-containing material, and amine-containing curing agent.

WO 03/042270 discloses a tranparent non-elastomeric, high-index, impact-resistant polythiouretane/urea material comprising the reaction product of a) at least one ($\alpha$,$\Omega$)-diiso(thio)cyanate.

In a further non-limiting embodiment, sulfur-containing polyurethane of the present invention can be prepared by combining

(a) material chosen from polyisocyanate, polyisothiocyanate, and mixtures thereof; and cycloaliphatic or aromatic prepolymer having a number average molecular weight ranging from 100 to 3,000 grams/mol, and b) at least one primary diamine in an equivalent molar ratio amine function/iso(thio)cyanate function from 0.5 to 2, wherein said prepolymer and diamine are free from disulfide linkage and at least one of the prepolymer or the diamine contains one or more S atoms in its chain.

(b) material chosen from trifunctional or higher-functional polyol, trifunctional or higher-functional polythiol, trifunctional or higher-functional material containing both hydroxyl and SH groups, and mixtures thereof; and

(c) material chosen from diol, dithiol, difunctional material containing both hydroxyl and SH groups, and mixtures thereof; wherein at least one of (a), (b), and (c) is sulfur-containing. In another embodiment, said dithiol of (c) can include at least one dithiol oligomer.

In a still further embodiment, sulfur-containing polyurethane(urea) of the present invention can be prepared in a one-pot process by reacting:

(a) at least one material chosen from polyisocyanate, or polyisothiocyanate, and mixtures thereof; and

(b) at least one material chosen from trifunctional or higher-functional polyol having a molecular weight of less than or equal to 200 grams/mole, trifunctional or higher-functional polythiol having a molecular weight of less than or equal to 700 grams/mole, trifunctional or higher-functional material containing both hydroxyl and SH groups having a molecular weight of less than or equal to 700 grams/mole, and mixtures thereof; and

(c) at least one material chosen from diol having a molecular weight of less than or equal to 200 grams/mole, dithiol having a molecular weight of less than or equal to 600 grams/mole, difunctional material containing both hydroxyl and SH groups having a molecular weight of less than or equal to 600 grams/mole, and mixtures thereof; and

(d) diamine,

wherein at least one of (a), (b), or (c) is sulfur-containing. In this non-limiting embodiment, (d) can further include trifunctional or higher-functional polyamine. In another non-limiting embodiment, the dithiol in (c) can include dithiol oligomer having number average molecular weight of less than or equal to 600 grams/mole, wherein said dithiol oligomer constitutes less than or equal to 70 mole percent of species included in (c).

As used herein and in the claims, the terms "isocyanate" and "isothiocyanate" include unblocked compounds capable of forming a covalent bond with a reactive group such as thiol, hydroxyl, or amine functional group. In alternate non-limiting embodiments, the polyisocyanate of the present invention can contain at least two functional groups chosen from isocyanate (NCO), the polyisothiocyanate can contain at least two functional groups chosen from isothiocyanate (NCS), and the isocyanate and isothiocyanate materials can each include combinations of isocyanate and isothiocyanate functional groups. In a embodiment, polyisothiocyanate can contain at least two groups chosen from isothiocyanate or

combination of isothiocyanate and isocyanate.

In alternate embodiments, sulfur-containing polyurethane and/or sulfur-containing polyurethane(urea) of the invention when polymerized can produce a polymerizate having a refractive index of at least 1.50, or at least 1.53, or at least 1.55, or at least 1.60. In further embodiments, wherein the sulfur-containing polyurethane and the sulfur-containing polyurethane(urea) of the present invention includes materials containing at least one aromatic ring and/or at least one sulfur-containing moiety, or combinations or mixtures thereof, sulfur-containing polyurethane and the sulfur-containing polyurethane(urea) when polymerized can produce a polymerizate having a refractive index of at least 1.53, or at least 1.55, or at least 1.56, or at least 1.57, or at least 1.58, or at least 1.59, or at least 1.60, or at least 1.62, or at least 1.65. In further alternate embodiments, the sulfur-containing polyurethane and the sulfur-containing polyurethane (urea) of the invention when polymerized can produce a polymerizate having an Abbe number of at least 30, or at least 32, or at least 35, or at least 38, or at least 39, or at least 40, or at least 44. The refractive index and Abbe number can be determined by methods known in the art such as American Standard Test Method (ASTM) Number D 542-00. Further, the refractive index and Abbe number can be determined using various known instruments. In an embodiment of the present invention, the refractive index and Abbe number can be measured in accordance with ASTM D 542-00 with the following exceptions: (i) test one to two samples/specimens instead of the minimum of three specimens specified in Section 7.3; and (ii) test the samples unconditioned instead of conditioning the samples/specimens prior to testing as specified in Section 8.1. Further, in a non-limiting embodiment, an Atago, model DR-M2 Multi-Wavelength Digital Abbe Refractometer can be used to measure the refractive index and Abbe number of the samples/specimens.

Good or adequately high rigidity/hardness and/or thermal properties are desirable characteristics for a polymerizate in order for it to be useful for optical/ophthalmic lens applications because high rigidity/hardness and/or thermal properties may be related to at least one of improved accuracy, processing yields, and durability when said polymerizate is subjected to processes related to manufacture of ophthalmic lens article, such as but not limited to surfacing, edging, and coating processes.

In an embodiment, the sulfur-containing polyurethane and the sulfur-containing polyurethane(urea) when polymerized can produce a polymerizate with adequately high hardness. Hardness can be determined by methods known in the art. In a non-limiting embodiment, hardness can be measured in accordance with ISO standard test method BS EN ISO 14577-1:2002. Further, in a non-limiting embodiment, a Fischer Scope H-100 instrument, supplied by Fischer Technology, Inc., can be used to measure the Martens Hardness, in accordance with BS EN ISO 14577-1:2002, and said Martens Hardness can be reported in the units of Newtons(N)/$mm^2$.

In alternate embodiments, sulfur-containing polyurethane of the present invention when polymerized can produce a polymerizate having Martens Hardness (HM 0.3/15/0) of greater than or equal to 80, or greater than 100, or greater than 110, or greater than 120, or greater than 130 Newton/$mm^2$; or less than 250, or less than 200 Newton/$mm^2$.

In another embodiment, sulfur-containing polyurethane(urea) of the present invention when polymerized can produce a polymerizate having Martens Hardness (HM 0.3/15/0) of greater than 80, or greater than 100, or greater than 110, or greater than 120, or greater than 140 Newton/$mm^2$; or less than 250, or less than 200 Newton/$mm^2$.

In an embodiment, the sulfur-containing polyurethane and/or sulfur-containing polyurethane(urea) when polymerized can produce a polymerizate with adequately high thermal properties. Thermal properties can be determined by methods known in the art. In a non-limiting embodiment, thermal properties can be measured in accordance with ASTM D648 Method B. Further, in a non-limiting embodiment, thermal properties of a polymerizate can be reported as Heat Distortion Temperature (i.e., temperature at which 0.254 mm (10 mils) deflection of sample bar occurs) and Total Deflection Temperature (i.e., temperature at which 2.54 mm (100 mils) deflection occurs), under the conditions of this test method. In a further non-limiting embodiment, the test can be carried out using an HDT Vicat instrument, supplied by CEAST USA, Inc.

In alternate embodiments, the sulfur-containing polyurethane, or sulfur-containing polyurethane(urea) of the present invention when polymerized can produce a polymerizate having Heat Distortion Temperature of at least 80°C, or at least 90 °C, or at least 100 °C or at least 110 °C.

In an embodiment, the sulfur-containing polyurethane, and/or sulfur-containing polyurethane(urea) when polymerized can produce a polymerizate having adequately good impact resistance/strength. Impact resistance can be measured using a variety of conventional methods known to one skilled in the art.

In an embodiment, the impact resistance can be measured using the Impact Energy Test, in which steel balls of increasing weight are successively dropped from a height of 1.27 meters onto a flat sheet sample of the polymerizate with a thickness of 3 mm, and which is supported on a neoprene O-ring, with inner diameter of 25 mm and thickness of 2.3 mm, affixed to a cylindrical steel holder. The sheet is determined to have passed the test if the sheet does not fracture. The sheet is determined to have failed the test when the sheet fractures. As used herein, the term "fracture" refers to a crack through the entire thickness of the sheet into two or more separate pieces, or detachment of one or more pieces of material from the backside of the sheet (i.e., the side of the sheet opposite the side of impact). The impact strength of the sample is reported as the impact energy (Joules) that corresponds to the highest level (i.e., largest ball) that the flat sheet passes, as is described in greater detail in the Experimental section herein.

In an alternate embodiment, using the Impact Energy Test as described herein, the sulfur-containing polyurethane, or sulfur-containing polyurethane(urea) of the present invention when polymerized can produce a polymerizate with impact strength of at least 1.0 Joule, or at least 2.0 Joules, or at least 4.95 Joules.

In an embodiment, sulfur-containing polyurethane of the present invention can comprise the reaction product of:

(a) material chosen from polyisocyanate, or polyisothiocyanate, and mixtures thereof;

(b) material chosen from trifunctional or higher-functional polyol having molecular weight of less than or equal to 200 grams/mole, trifunctional or higher-functional polythiol having molecular weight of less than or equal to 700 grams/mole, trifunctional or higher-functional material containing both hydroxyl and SH groups having molecular weight of less than or equal to 700 grams/mole, or, and mixtures thereof; and

(c) material chosen from diol having molecular weight of less than or equal to 200 grams/mole, dithiol having molecular weight of less than or equal to 600 grams/mole, difunctional material containing both hydroxyl and SH groups having molecular weight of less than or equal to 600 grams/mole, and mixtures thereof; wherein at least one of (a), (b), and (c) is sulfur-containing.

In an embodiment, said dithiol of (c) can include dithiol oligomer having number average molecular weight of less than or equal to 600 grams/mole, with the proviso that the dithiol oligomer constitutes less than or equal to 70 mole percent of species included in (c). In a further embodiment, (b) can be trifunctional and/or tetrafunctional polyol, trifunctional and/or tetrafunctional polythiol, trifunctional and/or tetrafunctional material containing both hydroxyl and SH groups, or mixtures thereof. In an alternate non-limiting embodiment, the ratio of the sum of the number of equivalents of the trifunctional or higher-functional polyol and the trifunctional or higher-functional polythiol and the trifunctional or higher-functional material containing both hydroxyl and SH groups to the sum of the number of equivalents of the polyisocyanate and the polyisothiocyanate can be from 0.05 : 1.0 to 0.4 to 1.0. In further embodiments, said ratio can be from 0.1 : 1.0 to 0.4 : 1.0, or from 0.15 : 1.0 to 0.4 : 1.0, or from 0.2 : 1.0 to 0.4 : 1.0, or from 0.1 : 1.0 to 0.3 : 1.0, or from 0.15 : 1.0 to 0.3 : 1.0, or from 0.2 : 1.0 to 0.3 : 1.0.

In an embodiment, the sulfur-containing polyurethane of the present invention can be prepared by (a) reacting material chosen from polyisocyanate, polyisothiocyanate, and mixtures thereof with material chosen from trifunctional or higher-functional polyol having molecular weight of less than or equal to 200 grams/mole, trifunctional or higher-functional polythiol having molecular weight of less than or equal to 700 grams/mole, trifunctional or higher-functional material containing both hydroxyl and SH groups having molecular weight of less than or equal to 700 grams/mole, and mixtures thereof, to form isocyanate or isothiocyanate or isothiocyanate/isocyanate terminated polyurethane prepolymer or sulfur-containing polyurethane prepolymer; and (b) chain-extending the prepolymer with active hydrogen-containing material, wherein the active hydrogen containing material can include material selected from diol having a molecular weight of less than or equal to 200 grams/mole, dithiol having a molecular weight of less than or equal to 600 grams/mole, or difunctional material containing both hydroxyl and SH groups having a molecular weight of less than or equal to 600 grams/mole, and mixtures thereof; wherein at least one of the materials included in (a) and (b) is sulfur-containing. In an embodiment, the dithiol of (b) can include dithiol oligomer having number average molecular weight of less than or equal to 600 grams/mole, with the proviso that the dithiol oligomer constitutes less than or equal to 70 mole percent of the species included in (b). In another embodiment, the active hydrogen-containing material of (b) can further include trifunctional or higher-funtional polyol having a molecular weight of less than or equal to 200 grams/mole, trifunctional or higher-functional polythiol having a molecular weight of less than or equal to 700 grams/mole, trifunctional or higher-functional material containing both hydroxyl and SH groups having a molecular weight of less than or equal to 700 grams/mole, and mixtures thereof.

In the foregoing embodiment, the amount of active hydrogen-containing materials included in (b) and the amount of isocyanate or isothiocyanate or isothiocyanate/isocyanate terminated polyurethane prepolymer or sulfur-containing polyurethane prepolymer can be selected such that the equivalent ratio of (OH +SH) : (NCO + NCS) can be from 1.1 : 1.0 to 0.85 : 1.0. In alternate non-limiting embodiments, said equivalent ratio of (OH + SH) : (NCO + NCS) can range from 1.1 : 1.0 to 0.90 : 1.0, or from 1.1 : 1.0 to 0.95 : 1.0, or from 1.0 : 1.0 to 0.90 : 1.0, or from 1.0 : 1.0 to 0.95 : 1.0.

In alternate embodiments, the amounts of polyisocyanate and/or polyisocthiocyanate and the amounts of trifunctional or higher-functional polyol, polythiol, and/or material containing both hydroxyl and SH groups used to prepare polyurethane prepolymer or sulfur-containing polyurethane prepolymer can be selected such that the viscosity of said prepolymer is less than 15 Pas (15,000 cps), or less than 8 Pas (8,000 cps), or less than 2 Pas (2,000 cps), measured at 73°C, using a Brookfield CAP 2000+ viscometer.

In an embodiment, the sulfur-containing polyurethane of the present invention can be prepared by reacting (a) material chosen from polyisocyanate, or polyisothiocyanate, and mixtures thereof, and (b) material chosen from trifunctional or higher-functional polyol having molecular weight of less than or equal to 200 grams/mole, trifunctional or higher-functional polythiol having molecular weight of less than or equal to 700 grams/mole, trifunctional or higher-functional material containing both hydroxyl and SH groups having molecular weight of less than or equal to 700 grams/mole, and

mixtures thereof, and (c) material selected from diol having molecular weight of less than or equal to 200 grams/mole, dithiol having molecular weight of less than or equal to 600 grams/mole, difunctional material containing both hydroxyl and SH groups having molecular weight of less than or equal to 600 grams/mole, and mixtures thereof, in a one-pot process; wherein at least one of the materials included in (a), (b), and (c) is sulfur-containing. In a non-limiting embodiment, the dithiol in (c) can include dithiol oligomer having number average molecular weight of less than or equal to 600 grams/mole, wherein said dithiol oligomer constitutes less than or equal to 70 mole percent of species included in (c). In an alternate
embodiment, the ratio of the sum of the number of equivalents of the species included in (b) to the sum of the number of equivalents of the species included in (a) can be from 0.05 : 1.0 to 0.4 : 1.0.

Polyisocyanates and polyisothiocyanates useful in the preparation of the sulfur-containing polyurethane, sulfur-containing polyurethane(urea) of the present invention are numerous and widely varied. Suitable polyisocyanates for use in the present invention can include but are not limited to polymeric polyisocyanates; aliphatic linear polyisocyanates; aliphatic branched polyisocyanates; cycloaliphatic polyisocyanates wherein one or more of the isocyanato groups are attached directly to the cycloaliphatic ring and cycloaliphatic polyisocyanates wherein one or more of the isocyanato groups are not attached directly to the cycloaliphatic ring; and aromatic polyisocyanates wherein one or more of the isocyanato groups are attached directly to the aromatic ring, and aromatic polyisocyanates wherein one or more of the isocyanato groups are not attached directly to the aromatic ring.

Suitable polyisothiocyanates for use in the present invention can include but are not limited to polymeric polyisothiocyanates; aliphatic linear polyisothiocyanates; aliphatic branched polyisothiocyanates; cycloaliphatic polyisothiocyanates wherein one or more of the isocyanato groups are attached directly to the cycloaliphatic ring and cycloaliphatic polyisothiocyanates wherein one or more of the isocyanato groups are not attached directly to the cycloaliphatic ring; and aromatic polyisothiocyanates wherein one or more of the isocyanato groups are attached directly to the aromatic ring, and aromatic polyisothiocyanates wherein one or more of the isocyanato groups are not attached directly to the aromatic ring.

Examples can include polyisocyanates and polyisothiocyanates having backbone linkages chosen from urethane linkages (-NH-C(O)-O-), thiourethane linkages (-NH-C(O)-S-), thiocarbamate linkages (-NH-C(S)-O-), dithiourethane linkages (-NH-C(S)-S-) and combinations thereof.

The molecular weight of the polyisocyanate and polyisothiocyanate can vary widely. In alternate embodiments, the number average molecular weight (Mn) of each can be at least 100 grams/mole, or at least 150 grams/mole, or less than 15,000 grams/mole, or less than 5000 grams/mole. The number average molecular weight can be determined using known methods. The number average molecular weight values recited herein and the claims were determined by gel permeation chromatography (GPC) using polystyrene standards.

Examples of suitable polyisocyanates and polyisothiocyanates can include but are not limited to those described in WO 2004/060951 A1 at paragraphs [0013] to [0035].

In further alternate non-limiting embodiments, the polyisocyanate can include meta-tetramethylxylylene diisocyanate (1,3-bis(1-isocyanato-1-methylethyl benzene); 3-isocyanato-methyl-3,5,5,-trimethyl cyclohexyl isocyanate ; 4,4 -methylene bis(cyclohexyl isocyanate); meta-xylylene diisocyanate, or mixtures thereof.

In an embodiment of the present invention, polyisocyanate and/or polyisothiocyanate can be combined with trifunctional or higher-functional polyol and/or polythiol and allowed to react to form polyurethane prepolymer or sulfur-containing polyurethane prepolymer; and said prepolymer then can be chain extended with diol, and/or dithiol, and optionally trifunctional or higher-functional polyol and/or polythiol to form polyurethane or sulfur-containing polyurethane polymer. In another non-limiting embodiment, polyisocyanate and/or polyisothiocyanate; trifunctional or higher-functional polyol and/or polythiol; diol and/or dithiol can be combined together in a one-pot process to form polyurethane or sulfur-containing polyurethane polymer.

In an embodiment of the present invention, polyisocyanate and/or polyisothiocyanate can be combined with trifunctional or higher functional polyol and/or polythiol and allowed to react to form polyurethane prepolymer or sulfur-containing polyurethane prepolymer; and said prepolymer then can be reacted with diol, and/or dithiol, and amine-containing curing agent to form polyurethane(urea) or sulfur-containing polyurethane (urea) polymer. In another non-limiting embodiment, polyisocyanate and/or polyisothiocyanate; trifunctional or higher-functional polyol and/or trifunctional or higher-functional polythiol; diol and/or dithiol; and amine-containing curing agent can be combined together in a one-pot process to form polyurethane (urea) or sulfur-containing polyurethane (urea) polymer.

In an embodiment, the sulfur-containing polyurethane (urea) of the present invention can be prepared by (a) reacting at least one material chosen from polyisocyanate, polyisothiocyanate, or mixtures thereof and active hydrogen-containing material including at least one material chosen from trifunctional or higher-functional polyol having molecular weight of less than or equal to 200 grams/mole, trifunctional or higher-functional polythiol having molecular weight of less than or equal to 700 grams/mole, trifunctional or higher-functional material containing both hydroxyl and SH groups having molecular weight of less than or equal to 700 grams/mole, or mixtures thereof, to form isocyanate or isothiocyanate or isothiocyanate/isocyanate terminated polyurethane prepolymer or sulfur-containing polyurethane prepolymer; and

(b) reacting said prepolymer with active hydrogen-containing material including diamine and at least one material selected from diol having molecular weight of less than or equal to 200 grams/mole, dithiol having molecular weight of less than or equal to 600 grams/mole, difunctional material containing both hydroxyl and SH groups having molecular weight of less than or equal to 600 grams/mole, or mixtures thereof; wherein at least one of the materials included in (a) or (b) is a sulfur-containing material. In this non-limiting embodiment, said dithiol of (b) can include dithiol oligomer having number average molecular weight of less than or equal to 600 grams/mole, with the proviso that said dithiol oligomer constitutes less than or equal to 70 mole percent of species included in (b). In another non-limiting embodiment, said active hydrogen-containing material of (b) can further comprise trifunctional or higher-funtional polyamine, trifunctional or higher-functional polyol, trifunctional or higher-functional polythiol having molecular weight of less than or equal to 700 grams/mole, trifunctional or higher-functional material containing both hydroxyl and SH groups having molecular weight of less than or equal to 700 grams/mole, or mixtures thereof.

In the foregoing embodiment, the amounts of said polyisocyanate and/or polyisothiocyanate, and the amounts of active hydrogen-containing materials included in (a) can be selected such that the equivalent ratio of (OH + SH) : (NCO + NCS) used to prepare said prepolymer can be from 0.05 : 1.0 to 0.4 : 1.0. In an alternate embodiment, the amounts of active hydrogen-containing materials included in (b) and the amount of said prepolymer can be selected such that the equivalent ratio of (OH +SH + NH) : (NCO + NCS) can be from 1.1 : 1.0 to 0.70 : 1.0. In alternate non-limiting embodiments, said equivalent ratio of (OH + SH + NH) : (NCO +,NCS) can range from 1.1 : 1.0 to 0.80 : 1.0, or from 1.1 : 1.0 to 0.85 : 1.0, or from 1.1 : 1.0 to 0.90 : 1.0, or from 1.0 : 1.0 to 0.90 : 1.0.

Active hydrogen-containing materials suitable for use in the present invention are varied and known in the art. Examples can include hydroxyl-containing materials such as but not limited to polyols; sulfur-containing materials such as but not limited to hydroxyl functional polysulfides, and SH-containing materials such as but not limited to polythiols; and materials having both hydroxyl and thiol functional groups.

Examples of trifunctional and higher-functional polyols for use in the present invention can include trimethylolethane, trimethylolpropane, di(trimethylolpropane), glycerol, pentaerythritol, di(pentaerythritol), cyclohexanetriol, ethoxylated trimethylolpropane, propoxylated trimethylolpropane, ethoxylated pentaerythritol, propoxylated pentaerythritol, or mixtures thereof.

Suitable diols for use in the present invention are varied and can be selected from those known in the art. Examples can include aliphatic, cycloaliphatic, aromatic, heterocyclic, polymeric, oligomeric diiols and mixtures thereof.

Examples of diols for use in the present invention can include those disclosed in the prior art and herein. Further non-limiting examples of diols for use in the present invention can include polyester diols, polycaprolactone diols, polyether diols, and polycarbonate diols with number average molecular weights ($M_n$) ranging from 200 to 5,000 grams/mole.

Suitable diols can include materials described by the following general formula:

(I') 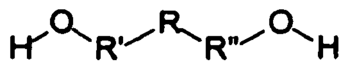

wherein R can represent $C_0$ to $C_{30}$ divalent linear or branched aliphatic, cycloaliphatic, aromatic, heterocyclic, or oligomeric saturated alkylene radical or mixtures thereof; $C_2$ to $C_{30}$ divalent organic radical containing at least one element selected from the group consisting of sulfur, oxygen and silicon in addition to carbon and hydrogen atoms; $C_5$ to $C_{30}$ divalent saturated cycloalkylene radical; $C_5$ to $C_{30}$ divalent saturated heterocycloalkylene radical; and

R' and R" can each independently represent $C_1$ to $C_{30}$ divalent linear or branched aliphatic, cycloaliphatic, aromatic, heterocyclic, polymeric, oligomeric saturated alkylene radical or mixtures thereof.

Examples of diols for use in the present invention can include ethylene glycol; propylene glycol; 1,2-butanediol; 1,4-butanediol; 1,3-butanediol; 2,2,4-trimethyl-1,3-pentanediol; 1,5-pentanediol; 2,4-pentanediol; 1,6 hexanediol; 2,5-hexanediol; 2-methyl-1,3 pentanediol; 2,4-heptanediol; 2-ethyl-1,3-hexanediol; 2,2-dimethyl-1,3-propanediol; 1,4-cyclohexanediol; 2,2-dimethyl-3-hydroxypropyl-2,2-dimethyl-3-hydroxypropionate; diethylene glycol; triethylene glycol; tetraethylene glycol; dipropylene glycol; tripropylene glycol; 1,4-cyclohexanedimethanol; 1,2-bis(hydroxymethyl)cyclohexane; 1,2-bis(hydroxyethyl)-cyclohexane; bishydroxypropyl hydantoin; the alkoxylation product of 1 mole of 2,2-bis(4-hydroxyphenyl)propane (i.e., bisphenol-A) and 2 moles of propylene oxide; and mixtures thereof.

In an, the trifunctional or higher functional polythiol for use in the present invention can include SH-containing material such as but not limited to a polythiol having at least three thiol groups. Non-limiting examples of suitable polythiols can include but are not limited to aliphatic linear or branched polythiols, cycloaliphatic polythiols, aromatic polythiols, heterocyclic polythiols, oligomeric polythiols and mixtures thereof. The polythiol can have linkages including but not limited to ether linkages (-O-), sulfide linkages (-S-), polysulfide linkages ($-S_x-$, wherein x is at least 2, or from 2 to 4) and combinations of such linkages. As used herein and the claims, the terms °thiol," "thiol group," "mercapto" or "mercapto group" refer to an -SH group which is capable of forming a thiourethane linkage, (i.e., -NH-C(O)-S-) with an isocyanate group or a dithiourethane linkage (i.e., -NH-C(S)-S-) with an isothiocyanate group.

Examples of suitable trifunctional or higher functional polythiols for use in the present invention can include but are not limited to pentaerythritol tetrakis(3-mercaptopropionate), pentaerythritol tetrakis(2-mercaptoacetate), trimethylolpropane tris(3-mercaptopropionate), trimethylolpropane tris(2-mercaptoacetate), and mixtures thereof.

Examples of suitable polythiols can include but are not limited to those described in WO 2004/060951 A1 at paragraphs [0056] to [0112].

The nature of the SH group of polythiols is such that oxidative coupling can occur readily, leading to formation of disulfide linkages. Various oxidizing agents can lead to such oxidative coupling. The oxygen in the air can in some cases lead to such oxidative coupling during storage of the polythiol. It is believed that a possible mechanism for the oxidative coupling of thiol groups involves the formation of thiyl radicals, followed by coupling of said thiyl radicals, to form disulfide linkage. It is further believed that formation of disulfide linkage can occur under conditions that can lead to the formation of thiyl radical, including but not limited to reaction conditions involving free radical initiation.

In an embodiment, the polythiol for use in the present invention can include species containing disulfide linkage formed during storage.

In another embodiment, the polythiol for use in the present invention can include species containing disulfide linkage formed during synthesis of said polythiol.

In an embodiment, dithiol for use in the present invention can include dithiol oligomer formed by the reation of dithiol with diene, via the thiol-ene type reaction of the SH groups of said dithiol with double bond groups of said diene.

In alternate embodiments, the dithiol for use in the present invention can include at least one dithol oligomer represented by the following structural formulas and prepared by the following methods.

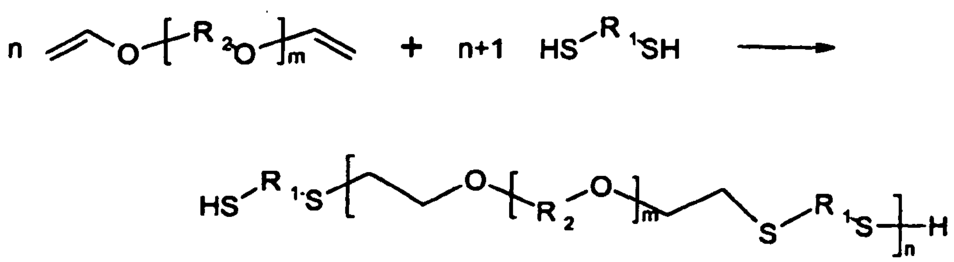

(IV'f)

wherein $R_1$ can be selected from $C_2$ to $C_6$ n-alkylene, $C_3$ to $C_6$ branched alkylene, having one or more pendant groups which can include but are not limited to hydroxyl, alkyl such as methyl or ethyl; alkoxy, thioalkyl, or $C_6$ to $C_8$ cycloalkylene; $R_2$ can be selected from $C_2$ to $C_6$ n-alkylene, $C_2$ to $C_6$ branched alkylene, $C_6$ to $C_8$ cycloalkylene or $C_6$ to $C_{10}$ alkylcycloalkylene group or $--[(CH_2-)_p--O--]_q--(--CH_2--)_r$ m can be a rational number from 0 to 10, n can be an integer from 1 to 20, p can be an integer from 2 to 6, q can be an integer from 1 to 5, and r can be an integer from 2 to 10.

Various methods of preparing the dithiol of formula (IV'f) are described in detail in United States Patent 6,509,418B1, column 4, line 52 through column 8, line 25. In general, this dithiol can be prepared by reacting reactants comprising one or more polyvinyl ether monomer, and one or more dithiol material. Useful polyvinyl ether monomers can include but are not limited to divinyl ethers represented by structural formula (V'):

$$CH_2{=}CH--O--(--R^2--O--)_m --CH{=}CH_2 \qquad (V')$$

wherein $R_2$ can be selected from $C_2$ to $C_6$ n-alkylene, $C_2$ to $C_6$ branched alkylene, $C_6$ to $C_8$ cycloalkylene or $C_6$ to $C_{10}$ alkylcycloalkylene group or $--[(CH_2--)_p--O--]_q--(--CH_2--)_r--$, m can be a rational number from 0 to 10, p can be an integer from 2 to 6, q can be an integer from 1 to 5 and r can be an integer from 2 to 10.

In an embodiment, m can be two (2).

Examples of suitable polyvinyl ether monomers for use can include divinyl ether monomers, such as but not limited to ethylene glycol divinyl ether, diethylene glycol divinyl ether and butane diol divinyl ether.

The divinyl ether of formula (V') can be reacted with a polythiol such as but not limited to a dithiol having the formula (VI') :

$$HS--R1--SH \qquad (VI')$$

wherein R1 can be selected from $C_2$ to $C_6$ n-alkylene; $C_3$ to $C_6$ branched alkylene, having one or more pendant groups which can include but are not limited to hydroxyl, alkyl such as methyl or ethyl; alkoxy, thioalkyl, or $C_6$ to $C_8$ cycloalkylene.

Examples of suitable dithiols represented by Formula (VI') can include but are not limited to dithiols such as 1,2-ethanedithiol, 1,2-propanedithiol, 1,3-propanedithiol, 1,3-butanedithiol, 1,4-butanedithiol, 2,3-butanedithiol, 1,3-pentanedithiol, 1,5-pentanedithiol, 1,6-hexanedithiol, 1,3-dimercapto-3-methylbutane, dipentenedimercaptan, ethylcyclohexyldithiol (ECHDT), dimercaptodiethylsulfide, methyl-substituted dimercaptodiethylsulfide, dimethyl-substituted dimercaptodiethylsulfide, dimercaptodioxaoctane, 1,5-dimercapto-3-oxapentane and mixtures thereof. In a non-limiting embodiment, the dithiol of formula (VI') can be dimercaptodiethylsulfide (DMDS).

In a further embodiment, the stoichiometric ratio of dithiol to divinyl ether materials can be less than one equivalent of polyvinyl ether to one equivalent of dithiol.

In an embodiment, the reactants used in producing dithiol represented by Formula (VI'f) can further include one or more free radical catalysts. Non-limiting examples of suitable free radical catalysts can include azo compounds, such as azobis-nitrile compounds such as but not limited to azo(bis)isobutyronitrile (AIBN); organic peroxides such as but not limited to benzoyl peroxide and t-butyl peroxide; inorganic peroxides and similar free-radical generators.

In alternate embodiments, the reaction to produce the material represented by Formula (VI'f) can be effected by irradiation with ultraviolet light either with or without a cationic photoinitiating moiety.

In an embodiment, the dithiol for use in the present invention can include a material having the following structural formula and prepared by the following reaction:

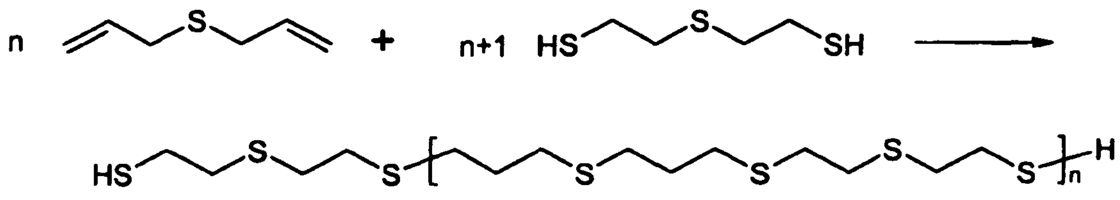

(IV'g)

wherein n can be an integer from 1 to 20.

Various methods of preparing the dithiol of the formula (IV'g) are described in detail in WO 03/042270, page 2, line 16 to page 10, line 7.

The dithiol can be prepared by ultraviolet (UV) catalyzed free radical polymerization in the presence of a suitable photoinitiator. Suitable photoinitiators in usual amounts as known to one skilled in the art can be used for this process. In a non-limiting embodiment, 1-hydroxycyclohexyl phenyl ketone (Irgacure 184) can be used in an amount of from 0.05% to 0.10% by weight, based on the total weight of the polymerizable monomers present in the mixture.

In an embodiment, the dithiol of the formula (IV'g) can be prepared by reacting "n" moles of allyl sulfide and "n+1" moles of dimercaptodiethylsulfide as shown above.

In an embodiment, the dithiol for use in the present invention can include a material represented by the following structural formula and prepared by the following reaction:

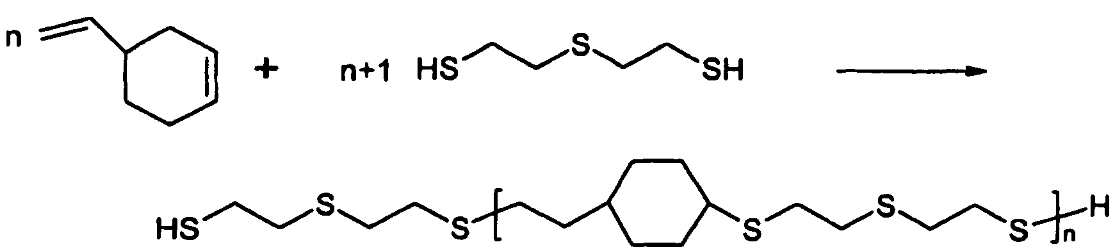

(IV'h)

wherein n can be an integer from 1 to 20.

Various methods for preparing the dithiol of formula (IV'h) are described in detail in WO/01/66623AI, from page 3, line 19 to page 6, line 11. In general, this dithiol can be prepared by the reaction of a dithiol, and an aliphatic, ring-containing non-conjugated diene in the presence of free radical initiator. Non-limiting examples of suitable dithiols for use in the reaction can include but are not limited to lower alkylene dithiols such as ethanedithiol, vinylcyclohexyldithiol, dicyclopentadienedithiol, dipentene dimercaptan, and hexanedithiol; polyol esters of thioglycolic acid and thiopropionic acid.

Examples of suitable cyclodienes can include but are not limited to vinylcyclohexene, dipentene, dicyclopentadiene, cyclododecadiene, cyclooctadiene, 2-cyclopenten-1-yl-ether, 5-vinyl-2-norbornene and norbornadiene.

Examples of suitable free radical initiators for the reaction can include azo or peroxide free radical initiators such as the azobisalkylenenitrile commercially available from DuPont under the trade name VAZO™.

In a further embodiment, the reaction of dimercaptoethylsulfide with 4-vinyl-1-cyclohexene can include VAZO-52 free radical initiator.

In an embodiment, the dithiol for use in the present invention can include a material represented by the following structural formula and reaction scheme:

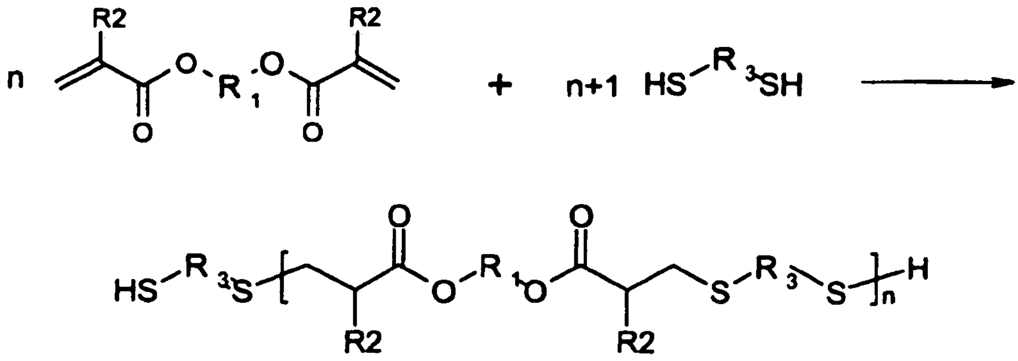

**(IV' j)**

wherein $R_1$ and $R_3$ can be independently chosen from $C_1$ to $C_6$ n-alkylene, $C_2$ to $C_6$ branched alkylene, $C_6$ to $C_8$ cycloalkylene, $C_6$ to $C_{10}$ alkylcycloalkylene, $C_6$ to $C_8$ aryl, $C_6$ to $C_{10}$ alkyl-aryl, alkyl groups containing ether linkages or thioether linkages or ester linkages or thioester linkages or combinations thereof, $\text{--}[(CH_2\text{-})_p\text{--}X\text{--}]_q\text{--}(\text{--}CH_2\text{--})_r\text{--}$, wherein X can be O or S, p can be an integer from 2 to 6, q can be an integer from 1 to 5, r can be an integer from 0 to 10; $R_2$ can be selected from hydrogen or methyl; and n can be an integer from 1 to 20.

In general, the dithiol of formula (IV' j) can be prepared by reacting di(meth)acrylate monomer and one or more polythiols. Non-limiting examples of suitable di(meth)acrylate monomers can vary widely and can include those known in the art, such as but not limited to ethylene glycol di(meth(acrylate, 1,3-butylene glycol di(meth)acrylate, 1,4-butanediol di(meth)acrylate, 2,3-dimethyl-1.3-propanediol di(meth)acrylate, 1,6-hexanediol di(meth)acrylate, propylene glcol di (meth)acrylate, dipropylene glycol di(meth)acrylate, tripropylene glycol di(meth)acrylate, tetrapropylene glycol di(meth) acrylate, ethoxylated hexanediol di(meth)acrylate, propoxylated hexanediol di(meth)acrylate, neopentyl glycol di(meth) acrylate, alkoxylated neopentyl glycol di(meth)acrylate, hexylene glycol di(meth)acrylate, diethylene glycol di(meth) acrylate, polyethylene glycol di(meth)acrylate, thiodiethyleneglycol di(meth)acrylate, trimethylene glycol di(meth)acrylate, triethylene glycol di(meth)acrylate, alkoxylated hexanediol di(meth)acrylate, alkoxyolated neopentyl glycol di(meth) acrylate, pentanediol di(meth)acrylate, cyclohexane dimethanol di(meth)acrylate, ethoxylated bis-phenol A di(meth) acrylate.

Examples of suitable dithiols for use in preparing the dithiol of formula (IV' j) can vary widely and can include those known in the art, such as but not limited to 1,2-ethanedithiol, 1,2-propanedithiol, 1,3-propanedithiol, 1,3-butanedithiol, 1,4-butanedithiol, 2,3-butanedithiol, 1,3-pentanedithiol, 1,5-pentanedithiol, 1,6-hexanedithiol, 1,3-dimercapto-3-methylbutane, dipentenedimercaptan, ethylcyclohexyldithiol (ECHDT), dimercaptodiethylsulfide (DMDS), methyl-substituted dimercaptodiethylsulfide, dimethyl-substituted dimercaptodiethylsulfide, dimercaptodioxaoctane, 3,6-dioxa,1,8-octanedithiol, 2-mercaptoethyl ether, 1,5-dimercapto-3-oxapentane, 2,5-dimercaptomethyl-1,4-dithiane (DMMD),ethylene glycol di(2-mercaptoacetate), ethylene glycol-di(3-mercaptopropionate), and mixtures thereof.

In an embodiment, the di(meth)acrylate used to prepare the dithiol of formula (IV'j) can be ethylene glycol di (meth)acrylate.

In another embodiment, the dithiol used to prepare the dithiol of formula (IV'j) can be dimercaptodiethylsulfide (DMDS).

In an embodiment, the reaction to produce the dithiol of formula (IV'j) can be carried out in the presence of base catalyst. Suitable base catalysts for use in this reaction can vary widely and can be selected from those known in the art. Non-limiting examples can include but are not limited to tertiary amine bases such as 1,8-diazabicyclo[5.4.0] undec-7-ene (DBU) and N,N-dimethylbenzylamine. The amount of base catalyst used can vary widely. In a non-limiting embodiment, the base catalyst can be present in an amount of from 0.001 to 5.0% by weight of the reaction mixture.

Not intending to be bound by any particular theory, it is believed that as the mixture of dithiol, di(meth)acrylate monomer, and base catalyst is reacted, the double bonds can be at least partially consumed by reaction with the SH groups of the pdithiol. In an embodiment, the mixture can be reacted for a period of time such that the double bonds are substantially consumed and a desired theoretical value for SH content is achieved. In a non-limiting embodiment, the

mixture can be reacted for a time period of from 1 hour to 5 days. In another non-limiting embodiment, the mixture can be reacted at a temperature of from 20°C to 100 °C. In a further non-limiting embodiment, the mixture can be reacted until a theoretical value for SH content of from 0.5% to 20% is achieved.

The number average molecular weight ($M_n$) of the resulting dithiol oligomer can vary widely. In an embodiment, the number average molecular weight ($M_n$) of dithiol oligomer can be determined by the stoichiometry of the reaction. In alternate embodiments, the $M_n$ of dithiol oligomer can be at least 250 grams/mole, or less than or equal to 3000 grams/mole, or from 250 to 2000 grams/mole, or from 250 to 1500 grams/mole.

In an embodiment, the dithiol for use in the present invention can include a material represented by the following structural formula and reaction scheme:

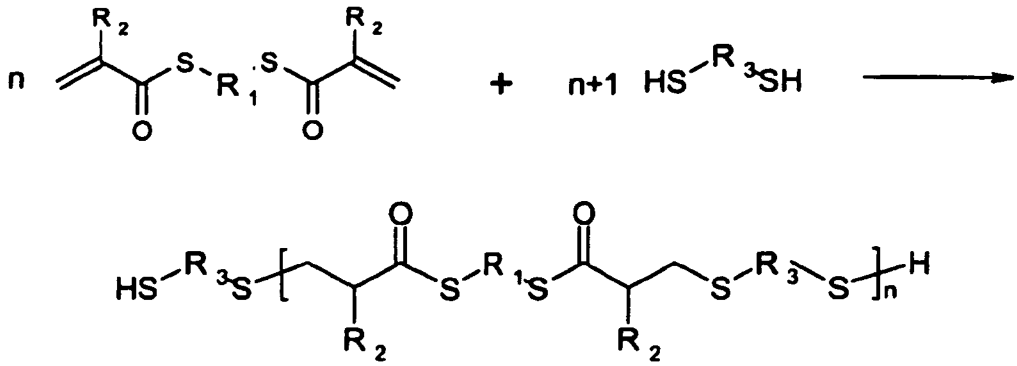

(IV' k)

wherein $R_1$ and $R_3$ each can be independently selected from $C_1$ to $C_6$ n-alkylene, $C_2$ to $C_6$ branched alkylene, $C_6$ to $C_8$ cycloalkylene, $C_6$ to $C_{10}$ alkylcycloalkylene, $C_6$ to $C_8$ aryl, $C_6$ to $C_{10}$ alkyl-aryl, alkyl groups containing ether linkages or thioether linkages or ester linkages or thioester linkages or combinations thereof, $--[(CH_2-)_p--X--]_q--(--CH_2--)_r--$, wherein X can be O or S, p can be an integer from 2 to 6, q can be an integer from 1 to 5, r can be an integer from 0 to 10; $R_2$ can be selected from hydrogen or methyl; and n can be an integer from 1 to 20.

In general, the dithiol of formula (IV' k) can be prepared by reacting dithio(meth)acrylate monomer, and one or more dithiols. Examples of suitable dithio(meth)acrylate monomers can vary widely and can include those known in the art, such as but not limited to the di(meth)acrylate of 1,2-ethanedithiol including oligomers thereof, the di(meth)acrylate of dimercaptodiethyl sulfide (i.e., 2,2'-thioethanedithiol di(meth)acrylate) including oligomers thereof, the di(meth)acrylate of 3,6-dioxa-1,8-octanedithiol including oligomers thereof, the di(meth)acrylate of 2-mercaptoethyl ether including oligomers thereof, the di(meth)acrylate of 4,4'-thiodibenzenethiol, and mixtures thereof.

The dithio(meth)acrylate monomer can be prepared from dithiol using methods known to those skilled in the art, including those methods disclosed in US 4,810,812, US 6,342,571; and WO 03/011925. Examples of suitable dithiol materials for use in preparing the dithiol of structure (IV' k) can include a wide variety of dithiols known in the art, such as but not limited to 1,2-ethanedithiol, 1,2-propanedithiol, 1,3-propanedithiol, 1,3-butanedithiol, 1,4-butanedithiol, 2,3-butanedithiol, 1,3-pentanedithiol, 1,5-pentanedithiol, 1,6-hexanedithiol, 1,3-dimercapto-3-methylbutane, dipentenedimercaptan, ethylcyclohexyldithiol (ECHDT), dimercaptodiethylsulfide, methyl-substituted dimercaptodiethylsulfide, dimethyl-substituted dimercaptodiethylsulfide, dimercaptodioxaoctane, 3,6-dioxa,1,8-octanedithiol, 2-mercaptoethyl ether, 1,5-dimercapto-3-oxapentane, 2,5-dimercaptomethyl-1,4-dithiane (DMMD),ethylene glycol di(2-mercaptoacetate), ethylene glycol di(3-mercaptopropionate, and mixtures thereof.

In an embodiment, the dithio(meth)acrylate used to prepare the polythiol of formula (IV' k) can be the di(meth) acrylate of dimercaptodiethylsulfide, i.e., 2,2'-thiodiethanethiol dimethacrylate. In another embodiment, the dithiol used to prepare the dithiol of formula (IV' k) can be dimercaptodiethylsulfide (DMDS).

In an embodiment, this reaction can be carried out in the presence of base catalyst. Non-limiting examples of suitable base catalysts for use can vary widely and can be selected from those known in the art. Non-limiting examples can include but are not limited to tertiary amine bases such as 1,8-diazabicyclo[5.4.0]undec-7-ene (DBU) and N,N-dimethylbenzylamine.

The amount of base catalyst used can vary widely. In a non-limiting embodiment, the base catalyst can be present in an amount of from 0.001 to 5.0% by weight of the reaction mixture. In an embodiment, the mixture can be reacted for a time period of from 1 hour to 5 days. In another non-limiting embodiment, the mixture can be reacted at a temperature of from 20 °C to 100 °C. In a further non-limiting embodiment, the mixture can be heated until a theoretical value for SH content of from 0.5% to 20% is achieved.

The number average molecular weight ($M_n$) of the resulting dithiol oligomer can vary widely. In an embodiment,

the number average molecular weight ($M_n$) of dithiol oligomer can be determined by the stoichiometry of the reaction. In alternate non-limiting embodiments, the $M_n$ of dithiol oligomer can be at least 250 grams/mole, or less than or equal to 3000grams/mole, or from 250 to 2000grams/mole, or from 250 to 1500 grams/mole.

In an embodiment, the dithiol for use in the present invention can include a material represented by the following structural formula and reaction:

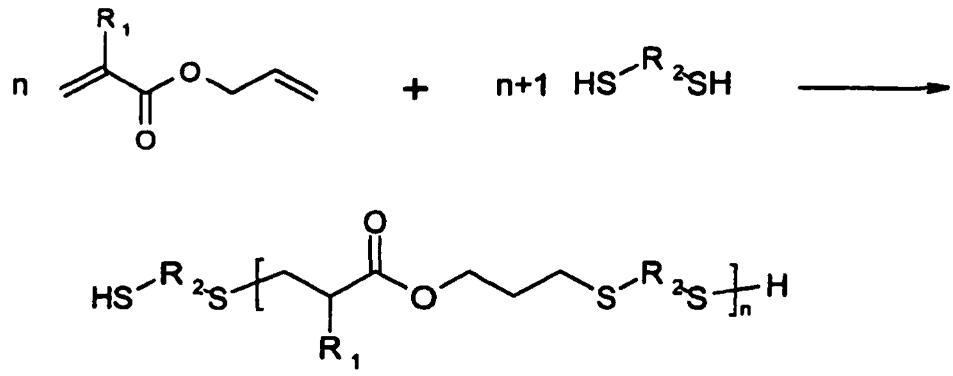

(IV' I)

wherein $R_1$ can be selected from hydrogen or methyl, and $R_2$ can be selected from $C_1$ to $C_6$ n-alkylene, $C_2$ to $C_6$ branched alkylene, $C_6$ to $C_8$ cycloalkylene, $C_6$ to $C_{10}$ alkylcycloalkylene, $C_6$ to $C_8$ aryl, $C_6$ to $C_{10}$ alkyl-aryl, alkyl groups containing ether linkages or thioether linkages or ester linkages or thioester linkages or combinations thereof,or $\text{--}[(CH_2\text{--})p\text{--}X\text{--}]_q\text{--}(\text{--}CH_2\text{--})_r\text{--}$, wherein X can be selected from O or S, p can be an integer from 2 to 6, q can be an integer from 1 to 5, r can be an integer from 0 to 10; and n can be an integer from 1 to 20.

In general, the dithiol of formula (IV' 1) can be prepared by reacting allyl(meth)acrylate, and one or more dithiols. Examples of suitable dithiols for use in preparing the dithiol of structure (IV' 1) can include a wide variety of known dithiols such as but not limited to 1,2-ethanedithiol, 1,2-propanedithiol, 1,3-propanedithiol, 1,3-butanedithiol, 1,4-butanedithiol, 2,3-butanedithiol, 1,3-pentanedithiol, 1,5-pentanedithiol, 1,6-hexanedithiol, 1,3-dimercapto-3-methylbutane, dipentenedimercaptan, ethylcyclohexyldithiol (ECHDT), dimercaptodiethylsulfide, methyl-substituted dimercaptodiethylsulfide, dimethyl-substituted dimercaptodiethylsulfide, dimercaptodioxaoctane, 3,6-dioxa,1,8-octanedithiol, 2-mercaptoethyl ether, 1,5-dimercapto-3-oxapentane, 2,5-dimercaptomethyl-1,4-dithiane,ethylene glycol di(2-mercaptoacetate), ethylene glycol di(3-mercaptopropionate), 4-tert-butyl-1,2-benzenedithiol, benzene dithiol, 4,4'-thiodibenzenethiol, and mixtures thereof.

In an embodiment, the dithiol used to prepare the dithiol of formula (IV' 1) can be dimercaptodiethylsulfide (DMDS).

In an embodiment, the (meth)acrylic double bonds of allyl (meth)acrylate can be first reacted with dithiol in the presence of base catalyst. Examples of suitable base catalysts can vary widely and can be selected from those known in the art. Non-limiting examples can include but are not limited to tertiary amine bases such as 1,8-diazabicyclo[5.4.0] undec-7-ene (DBU) and N,N-dimethylbenzylamine. The amount of base catalyst used can vary widely. In an embodiment, the base catalyst can be present in an amount of from 0.001 to 5.0% by weight of the reaction mixture. In an embodiment, the mixture can be reacted for a time period of from 1 hour to 5 days. In another embodiment, the mixture can be reacted at a temperature of from 20 °C to 100 °C. In a further embodiment, following reaction of the SH groups of the dithiol with substantially all of the available (meth)acrylate double bonds of the allyl (meth)acrylate, the allyl double bonds can then be reacted with the remaining SH groups in the presence of radical initiator. Not intending to be bound by any particular theory, it is believed that as the mixture is heated, the allyl double bonds can be at least partially consumed by reaction with the remaining SH groups. Non-limiting examples of suitable radical initiators can include but are not limited to azo or peroxide type free-radical initiators such as azobisalkylenenitriles. In an embodiment, the free-radical initiator can be azobisalkylenenitrile which is commercially available from DuPont under the trade name VAZO™. In alternate non-limiting embodiments, VAZO-52, VAZO-64, VAZO-67, or VAZO-88 catalysts can be used as radical initiators.

In an embodiment, the mixture can be heated for a period of time such that the double bonds are substantially consumed and a desired theoretical value for SH content is achieved. In an embodiment, the mixture can be heated for a time period of from 1 hour to 5 days. In another embodiment, the mixture can be heated at a temperature of from 40°C to 100°C. In a further non-limiting embodiment, the mixture can be heated until a theoretical value for SH content of from 0.5% to 20% is achieved.

The number average molecular weight ($M_n$) of the resulting dithiol oligomer can vary widely. In a non-limiting embodiment, the number average molecular weight ($M_n$) of dithiol oligomer can be determined by the stoichiometry of

the reaction. In alternate non-limiting embodiments, the $M_n$ of dithiol oligomer can be at least 250 grams/mole, or less than or equal to 3000grams/mole, or from 250 to 2000grams/mole, or from 250 to 1500 grams/mole.

In another embodiment, the polythiol for use in the present invention can include a material represented by the following structural formula and reaction scheme.

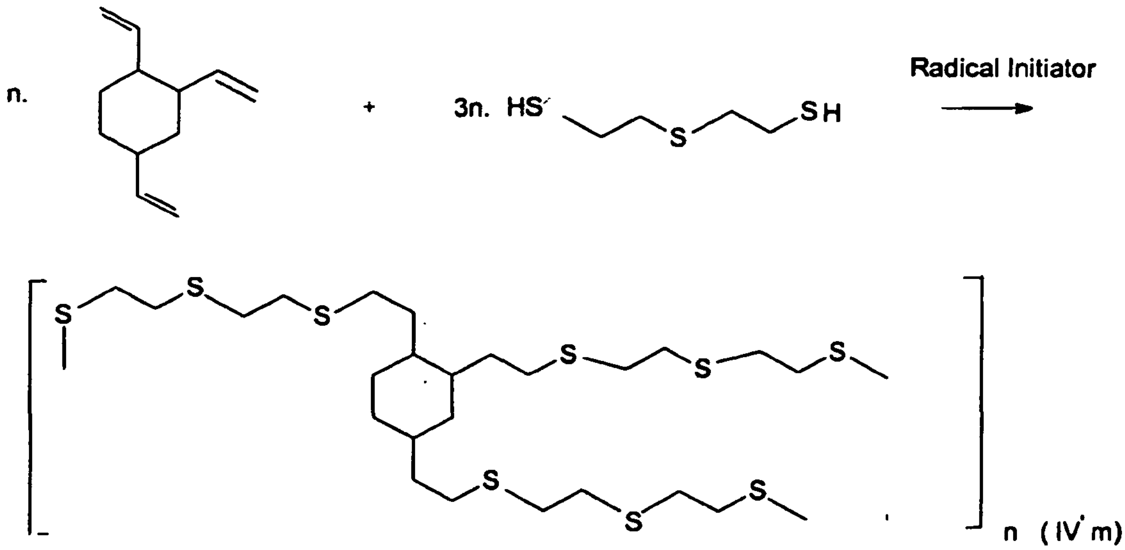


n (IV'm)

where n can be an integer from 1 to 20.

The polythiol of formula (IV'm) can be prepared by reacting one mole of 1,2,4-trivinylcyclohexane with three moles of dimercaptodiethylsulfide (DMDS), and heating the mixture in the presence of a suitable free radical initiator, such as VAZO 64.

In another embodiment, the dithiol for use in the present invention can include dithiol oligomer, prepared by reaction of at least one or more dithiol with at least two or more different dienes, wherein the stoichiometric ratio of the sum of the number of equivalents of all dithiols present to the sum of the number of equivalents of all dienes present is greater than 1.0 : 1.0. As used herein and the claims when referring to the dienes used in this reaction, the term "different dienes" includes the following non-limiting embodiments:

at least one non-cyclic diene and at least one cyclic diene selected from non-aromatic ring-containing dienes including but not limited to non-aromatic monocyclic dienes, non-aromatic polycyclic dienes or combinations thereof, and/or aromatic ring-containing dienes;

at least one aromatic ring-containing diene and at least one diene selected from non-aromatic cyclic dienes described above;

at least one non-aromatic monocyclic diene and at least one non-aromatic polycyclic diene.

In a further embodiment, the molar ratio of dithiol to diene in the reaction mixture can be (n+1) to (n) wherein n can represent an integer from 2 to 30.

Suitable dithiols for use in preparing the dithiol oligomer can be selected from a wide variety known in the art. Non-limiting examples can include those described herein.

The at least two or more different dienes can each be independently chosen from non-cyclic dienes, including straight chain and/or branched aliphatic non-cyclic dienes, non-aromatic ring-containing dienes, including non-aromatic ring-containing dienes wherein the double bonds can be contained within the ring or not contained within the ring or any combination thereof, and wherein said non-aromatic ring-containing dienes can contain non-aromatic monocyclic groups or non-aromatic polycyclic groups or combinations thereof; aromatic ring-containing dienes; or heterocyclic ring-containing dienes; or dienes containing any combination of such non-cyclic and/or cyclic groups, and wherein said two or more different dienes can optionally contain thioether, disulfide, polysulfide, sulfone, ester, thioester, carbonate, thiocarbonate, urethane, or thiourethane linkages, or halogen substituents, or combinations thereof; with the proviso that said dienes contain double bonds capable of undergoing reation with SH groups of polythiol, and forming covalent C-S bonds, and at least two of said dienes are different from one another; and the at least one or more dithiol can each be independently chosen from dithiols containing straight chain and/or branched non-cyclic aliphatic groups, cycloaliphatic groups, aryl groups, aryl-alkyl groups, heterocyclic groups, or combinations or mixtures thereof, and wherein said at least one or more dithiol can each optionally contain thioether, disulfide, polysulfide, sulfone, ester, thioester, carbonate,

thiocarbonate, urethane, or thiourethane linkages, or halogen substituents, or combinations thereof; and wherein the stoichiometric ratio of the sum of the number of equivalents of all dithiols present to the sum of the number of equivalents of all dienes present is greater than 1:1. In non-limiting embodiments, said ratio can be within the range of from greater than 1:1 to 3:1, or from 1.01:1 to 3:1, or from 1.01:1 to 2:1, or from 1.05:1 to 2:1, or from 1.1:1 to 1.5:1, or from 1.25:1 to 1.5:1. As used herein and in the claims, the term "number of equivalents" refers to the number of moles of a particular diene or dithiol, multiplied by the average number of thiol groups or double bond groups per molecule of said diene or dithiol, respectively.

The reaction mixture that consists of the group of at least two or more different dienes and the group of at least one or more dithiol and the corresponding number of equivalents of each diene and dithiol that is used to prepare the dithiol oligomer can be depicted as shown in Scheme I below:

**Scheme I.** $d_1D_1 + d_2D_2 + \ldots + d_xD_x + t_1T_1 + \ldots + tyTy \rightarrow$ dithiol oligomer;

wherein $D_1$ through $D_x$ represent two or more different dienes, x is an integer greater than or equal to 2, that represents the total number of different dienes that are present; $d_1$ through $d_x$ represent the number of equivalents of each corresponding diene; $T_1$ through $T_y$ represent one or more dithiol; and $t_1$ through $t_y$ represent the number of equivalents of each corresponding dithiol.

More generally, the group of at least two or more different dienes and the corresponding number of equivalents of each diene can be described by the term $d_iD_i$ (such as $d_1D_1$ through $d_xD_x$, as shown in Scheme I above), wherein $D_i$ represents the $i^{th}$ diene and $d_i$ represents the number of equivalents of $D_i$, i being can be an integer ranging from 1 to x, wherein x is an integer, greater than or equal to 2, that defines the total number of different dienes that are present. Furthermore, the sum of the number of equivalents of all dienes present can be represented by the term d, defined according to Expression (I),

$$d = \sum_{i=1}^{x} d_i$$

Expression (I)

wherein i, x, and $d_i$ are as defined above.

Similarly, the group of at least one or more dithiol and the corresponding number of equivalents of each dithiol can be described by the term $t_jT_j$ (such as $t_1T_1$ through $t_yT_y$, as shown in Scheme I above), wherein $T_j$ represents the $j^{th}$ dithiol and $t_j$ represents the number of equivalents of the corresponding dithiol $T_j$, j being an integer ranging from 1 to y, wherein y is an integer that defines the total number of dithiols present, and y has a value greater than or equal to 1. Furthermore, the sum of the number of equivalents of all dithiols present can be represented by the term t, defined according to Expression (II),

$$t = \sum_{j=1}^{y} t_j$$

Expression (II)

wherein j, y, and $t_j$ are as defined above.

The ratio of the sum of the number of equivalents of all dithiols present to the sum of the number of equivalents of all dienes present can be characterized by the term t/d, wherein t and d are as defined above. The ratio t/d is a rational number with values greater than 1:1. In non-limiting embodiments, the ratio t/d can have values within the range of from greater than 1:1 to 3:1, or from 1.01:1 to 3:1, or from 1.01:1 to 2:1, or from 1.05:1 to 2:1, or from 1.1:1 to 1.5:1, or from 1.25:1 to 1.5:1.

As is known in the art, for a given set of dienes and dithiols, a statistical mixture of oligomer molecules with varying molecular weights are formed during the reaction in which the dithiol oligomer is prepared, where the number average molecular weight of the resulting mixture can be calculated and predicted based upon the molecular weights of the dienes and dithiols, and the relative equivalent ratio or mole ratio of the dienes and dithiols present in the reaction

mixture that is used to prepare said dithiol oligomer. As is also known to those skilled in the art, the above parameters can be varied in order to adjust the number average molecular weight of the dithiol oligomer. For example, in a non-limiting embodiment, if the value of x as defined above is 2, and the value of y is 1; and $diene_1$ has a molecular weight (MW) of 120, $diene_2$ has a molecular weight of 158, dithiol has a molecular weight of 154; and $diene_1$, $diene_2$, and dithiol are present in relative molar amounts of 2 moles : 4 moles : 8 moles, respectively, then the number average molecular weight ($M_n$) of the resulting dithiol oligomer is calculated as follows:

$$M_n = \{(moles_{diene1} \times MW_{diene1}) + (moles_{diene2} \times MW_{diene2}) + (moles_{dithiol} \times MW_{dithiol})\}/m,$$

wherein m is the number of moles of the material that is present in the smallest molar amount.

$$= \{(2 \times 120) + (4 \times 158) + (8 \times 154)\} / 2$$
$$= 1052 \text{ g/mole}$$

As used herein and in the claims when referring to the group of at least two or more different dienes used in the preparation of the dithiol oligomer, the term "different dienes" refers to dienes that can be different from one another in any one of a variety of ways. In non-limiting embodiments, the "different dienes" can be different from one another in one of the following three ways: a) non-cyclic vs. cyclic; b) aromatic-ring containing vs. non-aromatic; or c) monocyclic non-aromatic vs. polycyclic non-aromatic; whereby non-limiting embodiments of this invention can include any of the following three embodiments:

a) at least one non-cyclic diene and at least one cyclic diene selected from non-aromatic ring-containing dienes, including but not limited to dienes containing non-aromatic monocyclic groups or dienes containing non-aromatic polycyclic groups, or combinations thereof, and/or aromatic ring-containing dienes; or
b) at least one aromatic ring-containing diene and at least one diene selected from non-aromatic cyclic dienes, as described above; or
c) at least one non-aromatic ring containing diene containing non-aromatic monocyclic group, and at least one non-aromatic ring-containing diene containing polycyclic non-aromatic group.

In an embodiment, the dithiol oligomer can be as depicted in Formula (AA') in Scheme II below, produced from the reaction of $Diene_1$ and $Diene_2$ with a dithiol; wherein $R_2$ and $R_4$ can be independently chosen from H, methyl, or ethyl, and $R_1$ and $R_3$ can be independently chosen from straight chain and/or branched aliphatic non-cyclic moieties, non-aromatic ring-containing moieties, including non-aromatic monocyclic moieties or non-aromatic polycyclic moieties or combinations thereof; aromatic ring-containing moieties; or heterocyclic ring-containing moieties; or moieties containing any combination of such non-cyclic and/or cyclic groups, and wherein $R_1$ and $R_3$ can optionally contain ether, thioether, disulfide, polysulfide, sulfone, ester, thioester, carbonate, thiocarbonate, urethane, or thiourethane linkages, or halogen substituents, or combinations thereof; with the proviso that $Diene_1$ and $Diene_2$ contain double bonds capable of reacting with SH of polythiol, and forming covalent C-S bonds, and $Diene_1$ and $Diene_2$ are different from one another; and wherein $R_5$ can be chosen from divalent groups containing straight chain and/or branched non-cyclic aliphatic groups, cycloaliphatic groups, aryl groups, aryl-alkyl groups, heterocyclic groups, or combinations or mixtures thereof, and wherein $R_5$ can optionally contain ether, thioether, disulfide, polysulfide, sulfone, ester, thioester, carbonate, thiocarbonate, urethane, or thiourethane linkages, or halogen substituents, or combinations thereof; and n is an integer ranging from 1 to 20.

Scheme II

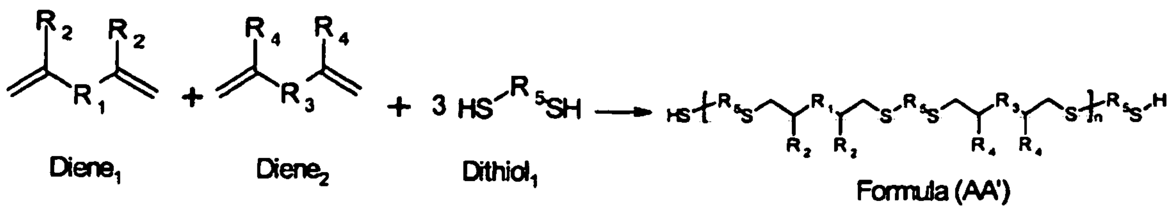

$Diene_1$ $Diene_2$ $Dithiol_1$ Formula (AA')

In a second embodiment, the dithiol oligomer can be as depicted in Formula (AA'') in Scheme III below, produced

from the reaction of $Diene_1$ and 4-vinyl-1-norbornene (VNB) with a dithiol; wherein $R_2$ can be chosen from H, methyl, or ethyl, and $R_1$ can be chosen from straight chain and/or branched aliphatic non-cyclic moieties, non-aromatic ring-containing moieties, wherein said non-aromatic ring-containing moieties can include non-aromatic monocyclic moieties; aromatic ring-containing moieties; or heterocyclic ring-containing moieties; or include moieties containing any combination of such non-cyclic and/or cyclic groups, and wherein $R_1$ can optionally contain ether, thioether, disulfide, polysulfide, sulfone, ester, thioester, carbonate, thiocarbonate, urethane, or thiourethane linkages, or halogen substituents, or combinations thereof; with the proviso that $Diene_1$ contains double bonds capable of reacting with SH of polythiol, and forming covalent C-S bonds, and $Diene_1$ is different from VNB; and wherein $R_3$ can be chosen from divalent groups containing straight chain and/or branched non-cyclic aliphatic groups, cycloaliphatic groups, aryl groups, aryl-alkyl groups, heterocyclic groups, or combinations or mixtures thereof, and wherein $R_3$ can optionally contain ether, thioether, disulfide, polysulfide, sulfone, ester, thioester, carbonate, thiocarbonate, urethane, or thiourethane linkages, or halogen substituents, or combinations thereof; and n is an integer ranging from 1 to 20.

Scheme III

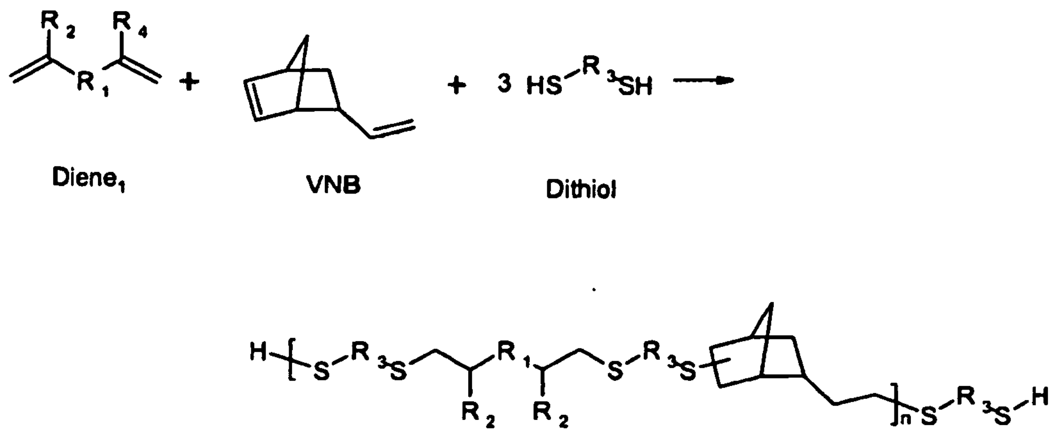

$Diene_1$ VNB Dithiol

Formula (AA")

In a third embodiment, wherein the dithiol oligomer comprises dithiol oligomer depicted in Formula (AA"') in Scheme IV below, produced from the reaction of $Diene_1$ and 4-vinyl-1-cyclohexene (VCH) with a dithiol; wherein $R_2$ can be chosen from H, methyl, or ethyl, and $R_1$ can be chosen from straight chain and/or branched aliphatic non-cyclic moieties, non-aromatic ring-containing moieties, wherein said non-aromatic ring-containing moieties can include non-aromatic polycyclic moieties; aromatic ring-containing moieties; or heterocyclic ring-containing moieties; or moieties containing any combination of such non-cyclic and/or cyclic groups, and wherein $R_1$ can optionally contain ether, thioether, disulfide, polysulfide, sulfone, ester, thioester, carbonate, thiocarbonate, urethane, or thiourethane linkages, or halogen substituents, or combinations thereof; with the proviso that $Diene_1$ contains double bonds capable of reacting with SH of polythiol, and forming covalent C-S bonds, and $Diene_1$ is different from VCH; and wherein $R_3$ can be chosen from divalent groups containing straight chain and/or branched non-cyclic aliphatic groups, cycloaliphatic groups, aryl groups, aryl-alkyl groups, heterocyclic groups, or combinations or mixtures thereof, and wherein $R_5$ can optionally contain thioether, disulfide, polysulfide, sulfone, ester, thioester, carbonate, thiocarbonate, urethane, or thiourethane linkages, or halogen substituents, or combinations thereof; and n is an integer ranging from 1 to 20.

Scheme IV

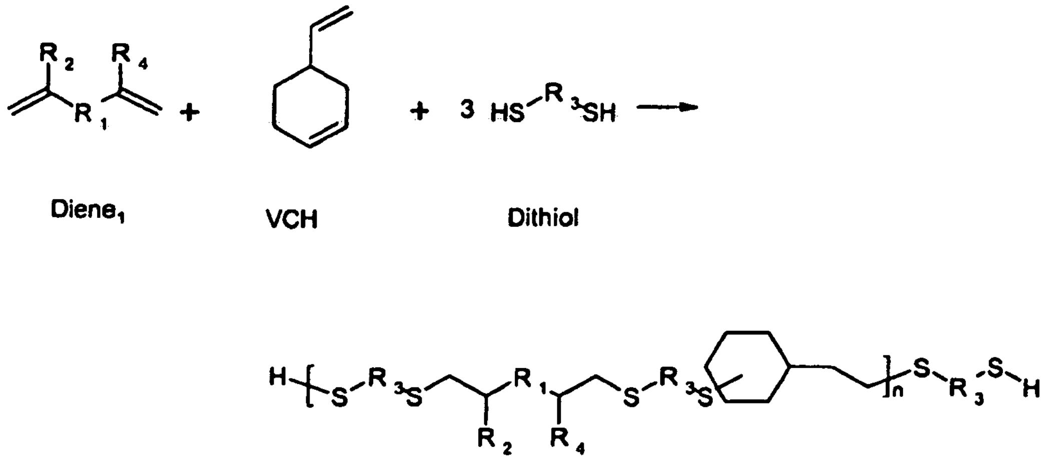

Diene$_1$ VCH Dithiol

Formula (AA''')

In a further embodiment, the polythiol for use in the present invention can comprise polythiol oligomer produced by the reaction of

a) at least two or more different dienes;
b) at least one or more dithiol; and
c) optionally one or more trifunctional or higher functional polythiol; wherein the at least two or more different dienes can each be independently chosen from non-cyclic dienes, including straight chain and/or branched aliphatic non-cyclic dienes, non-aromatic ring-containing dienes, including non-aromatic ring-containing dienes wherein the double bonds can be contained within the ring or not contained within the ring or any combination thereof, and wherein said non-aromatic ring-containing dienes can contain non-aromatic monocyclic groups or non-aromatic polycyclic groups or combinations thereof; aromatic ring-containing dienes; or heterocyclic ring-containing dienes; or dienes containing any combination of such non-cyclic and/or cyclic groups, and wherein said two or more different dienes can optionally contain thioether, disulfide, polysulfide, sulfone, ester, thioester, carbonate, thiocarbonate, urethane, or thiourethane linkages, or halogen substituents, or combinations thereof; with the proviso that at least two of said dienes contain double bonds capable of reacting with SH group of polythiol, and forming covalent C-S bonds, and at least two or more of said dienes are different from one another; the one or more dithiol can each be independently chosen from dithiols containing straight chain and/or branched non-cyclic aliphatic groups, cycloaliphatic groups, aryl groups, aryl-alkyl groups, heterocyclic groups, or combinations or mixtures thereof, and wherein said one or more dithiol can each optionally contain thioether, disulfide, polysulfide, sulfone, ester, thioester, carbonate, thiocarbonate, urethane, or thiourethane linkages, or halogen substituents, or combinations thereof; the trifunctional or higher functional polythiol can be chosen from polythiols containing straight chain and/or branched non-cyclic aliphatic groups, cycloaliphatic groups, aryl groups, aryl-alkyl groups, heterocyclic groups, or combinations or mixtures thereof, and wherein said trifunctional or higher functional polythiol can each optionally contain thioether, disulfide, polysulfide, sulfone, ester, thioester, carbonate, thiocarbonate, urethane, or thiourethane linkages, or halogen substituents, or combinations thereof; and wherein the stoichiometric ratio of the sum of the number of equivalents of all dithiols present to the sum of the number of equivalents of all dienes present is greater than 1:1.

Suitable dithiols for use in preparing polythiol oligomer can be selected from a wide variety known in the art. Examples can include those disclosed herein.

Suitable trifunctional or higher-functional polythiols for use in preparing polythiol oligomer can be selected from a wide variety known in the art. Examples can include those disclosed herein. Further examples of suitable trifunctional or higher-functional polythiols can include but are not limited to pentaerythritol tetrakis(2-mercaptoacetate), pentaerythritol tetrakis(3-mercaptopropionate), trimethylolpropane tris(2-mercaptoacetate), trimethylolpropane tris(3-mercaptopropionate), thioglycerol bis(2-mercaptoacetate), and mixtures thereof.

Suitable dienes for use in preparing the dithiol oligomer can vary widely and can be selected from those known in the art. Examples of suitable dienes can include but are not limited to non-cyclic dienes such as acyclic non-conjugated dienes, acyclic polyvinyl ethers, allyl- and vinyl-acrylates, allyl- and vinyl-methacrylates, diacrylate and dimethacrylate esters of linear diols and dithiols, diacrylate and dimethacrylate esters of poly(alkyleneglycol) diols; monocyclic non-aromatic dienes; polycyclic non-aromatic dienes; aromatic ring-containing dienes such as diallyl and divinyl esters of

aromatic ring dicarboxylic acids; and mixtures thereof.

examples of acyclic non-conjugated dienes can include those represented by the following general formula:

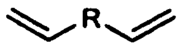

wherein R can represent $C_1$ to $C_{30}$ linear branched divalent saturated alkylene radical, or $C_2$ to $C_{30}$ divalent organic radical including groups such as but not limted to those containing either, thioether, ester, thioester, ketone, polysulfide, sulfone and combinations thereof. In a non-limiting embodiment, provide fall back position for "R" definition.

In alternate non-limiting embodiments, the acyclic non-conjugated dienes can be selected from 1,5-hexadiene, 1,6-heptadiene, 1,7-octadiene and mixtures thereof.

Non-limiting examples of suitable acyclic polyvinyl ethers can include but are not limited to those represented by structural formula (V'):

$$CH_2{=}CH\text{--}O\text{--}(\text{--}R^2\text{ --}O\text{--})_m\text{ --}CH{=}CH_2 \qquad (V')$$

wherein $R^2$ can be $C_2$ to $C_6$ n-alkylene, $C_2$ to $C_6$ branched alkylene group, or $\text{--}[(CH_2\text{ --})_p\text{ --}O\text{--}]_q\text{ --}(\text{--}CH_2\text{ --})_r\text{ --}$, m can be a rational number from 0 to 10, p can be an integer from 2 to 6, q can be an integer from 1 to 5 and r can be an integer from 2 to 10.

In an embodiment, m can be two (2).

Examples of suitable polyvinyl ether monomers for use can include divinyl ether monomers, such as to ethylene glycol divinyl ether, diethylene glycol divinyl ether, triethyleneglycol divinyl ether, and mixtures thereof.

Examples of suitable allyl- and vinyl-acrylates and methacrylates can include but are not limited to those represented by the following formulas:

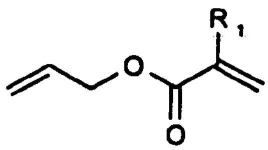

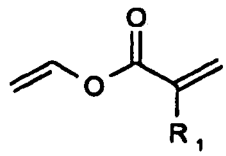

wherein R1 each independently can be hydrogen or methyl.

In an embodiment, the acrylate and methacrylate monomers can include monomers such as but not limited to allyl methacrylate, allyl acrylate and mixtures thereof.

Non-limiting examples of diacrylate and dimethacrylate esters of linear diols can include but are not limited to those represented by the following structural formula:

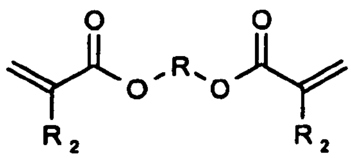

wherein R can represent $C_1$ to $C_{30}$ divalent saturated alkylene radical; branched divalent saturated alkylene radical; or $C_2$ to $C_{30}$ divalent organic radical including groups such as but not limted to those containing either, thioether, ester, thioester, ketone, polysulfide, sulfone and combinations thereof; and $R_2$ can represent hydrogen or methyl.

In alternate embodiments, the diacrylate and dimethacrylate esters of linear diols can include ethanediol dimethacrylate, 1,3-propanediol diacrylate, 1,3-propanediol dimethacrylate, 1,2-propanediol diacrylate, 1,2-propanediol dimethacrylate, 1,4-butanediol diacrylate, 1,4-butanediol dimethacrylate, 1,3-butanediol diacrylate, 1,3-butanediol dimethacrylate, 1,2-butanediol diacrylate, 1,2-butanediol dimethacrylate, and mixtures thereof.

Examples of diacrylate and dimethacrylate esters of poly(alkyleneglycol) diols can include but are not limited to those represented by the following structural formula:

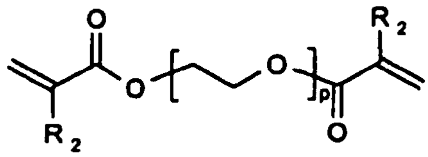

wherein $R_2$ each independently can represent hydrogen or methyl and p can represent an integer from 1 to 5.

In alternate embodiments, the diacrylate and dimethacrylate esters of poly(alkyleneglycol) diols can include ethylene glycol dimethacrylate, ethylene glycol diacrylate, diethylene glycol dimethacrylate, diethylene glycol diacrylate, and mixtures thereof.

Further examples of suitable dienes can include monocyclic aliphatic dienes such as but not limited to those represented by the following structural formulas:

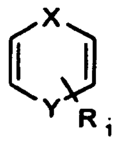

wherein X and Y each independently can represent $C_{1-10}$ divalent saturated alkylene radical; or $C_{1-5}$ divalent saturated alkylene radical, containing at least one element selected from the group of sulfur, oxygen and silicon in addition to the carbon and hydrogen atoms; and $R_1$ can represent H, or $C_1$-$C_{10}$ alkyl; and

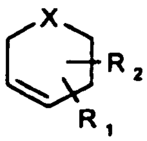

wherein X and $R_1$ can be as defined above and $R_2$ can represent $C_2$-$C_{10}$ alkenyl.

In alternate embodiments, the monocyclic aliphatic dienes can include 1,4-cyclohexadiene, 4-vinyl-1-cyclohexene, dipentene and terpinene.

Examples of polycyclic aliphatic dienes can include but are not limited to 5-vinyl-2-norbornene; 2,5-norbornadiene; dicyclopentadiene and mixtures thereof.

Examples of aromatic ring-containing dienes can include but are not limited to those represented by the following structural formula:

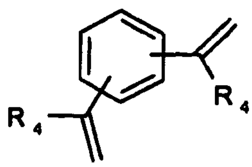

wherein $R_4$ can represent hydrogen or methyl

In alternate the aromatic ring-containing dienes can include monomers such as 1,3-diispropenyl benzene, divinyl benzene and mixtures thereof.

Examples of diallyl esters of aromatic ring dicarboxylic acids can include but are not limited to those represented by the following structural formula:

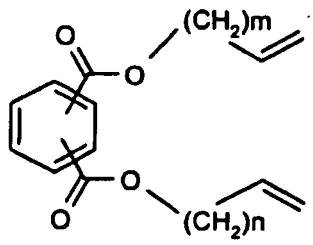

wherein m and n each independently can be an integer from 0 to 5.

In alternate embodiments, the diallyl esters of aromatic ring dicarboxylic acids can include o-diallyl phthalate, m-diallyl phthalate, p-diallyl phthalate and mixtures thereof.

In an embodiment, reaction of at least one polythiol with two or more different dienes can be carried out in the presence of radical initiator. Suitable radical initiators for use in the present invention can vary widely and can include those known to one of ordinary skill in the art. Examples of radical initiators can include but azo or peroxide type free-radical initiators such as azobisalkalenenitriles. In an embodiment, the free-radical initiator can be azobisalkalenenitrile which is commercially available from DuPont under the trade name VAZO™. In alternate non-limiting embodiments, VAZO-52, VAZO-64, VAZO-67, VAZO-88 and mixtures thereof can be used as radical initiators.

In an embodiment, selection of the free-radical initiator can depend on reaction temperature. In an embodiment, the reaction temperature can vary from room temperature to 100°C. In further alternate embodiments, Vazo 52 can be used at a temperature of from 50-60 °C, or Vazo 64, Vazo 67 can be used at a temperature of 60-70 °C, or and Vazo 88 can be used at a temperature of 70-100°C.

The reaction of at least one polythiol and two or more different dienes can be carried out under a variety of reaction conditions. In alternate embodiments, such conditions can depend on the degree of reactivity of the dienes and the desired structure of the resulting polythiol oligomer. In a embodiment, polythiol, two or more different dienes and radical initiator can be combined together while heating the mixture. In a further embodiment, polythiol and radical initiator can be combined together and added in relatively small amounts over a period of time to a mixture of two or more dienes. In another embodiment, two or more dienes can be combined with polythiol in a stepwise manner under radical initiation.

In another embodiment, polythiol can be mixed with one diene and optionally free radical initiator; the diene and polythiol and optionally free radical initiator can be allowed to react and then a second diene can be added to the mixture, followed by addition of the radical initiator to the mixture. The mixture is allowed to react until the double bonds are essentially consumed and a pre-calculated (e.g., by titration based on stoichiometry) theoretical SH equivalent weight is obtained. The reaction time for completion can vary from one hour to five days depending on the reactivity of the dienes used.

In a further embodiment, the final oligomeric product of the stepwise addition process can be a block-type copolymer.

In an embodiment, the reaction of at least one polythiol with two or more different dienes can be carried out in the presence of a catalyst. Suitable catalysts for use in the reaction can vary widely and can be selected from those known in the art. The amount of catalyst used in the reaction of the present invention can vary widely and can depend on the catalyst selected. In an embodiment, the amount of catalyst can be present in an amount of from 0.01% by weight to 5% by weight of the reaction mixture.

In an embodiment, wherein the mixture of dienes can be a mixture of acrylic monomers, the acrylic monomers can be reacted with polythiol in the presence of a base catalyst. Suitable base catalysts for use in this reaction vary widely and can be selected from those known in the art. Examples can include but are not limited to tertiary amine bases such as 1,8-diazabicyclo[5.4.0]undec-7-ene (DBU) and N,N-dimethylbenzylamine. The amount of base catalyst used can vary widely. In an embodiment, the base catalyst can be present in an amount of from 0.01 to 5.0% by weight of the reaction mixture. The reaction of the acrylic monomers with polythiol in the presence of a base catalyst can substantially minimize or essentially preclude double bond polymerization.

In another embodiment, in order to substantially minimize or essentially preclude double bond polymerization, acrylic double bonds can be first reacted with polythiol under basic catalysis conditions and then, electron-rich reactive double bond dienes can be added to the intermediate product and reacted under radical initiation conditions. Non-limiting examples of electron-rich reactive double bond dienes can include materials such as but not limited to vinyl ethers, aliphatic dienes and cycloaliphatic dienes.

Not intending to be bound by any particular theory, it is believed that as the mixture of polythiol, dienes and radical intiator is heated, the double bonds are at least partially consumed by reaction with the SH groups of the polythiol. The mixture can be heated for a sufficient period of time such that the double bonds are essentially consumed and a pre-calculated theoretical value for SH content is reached. In a non-limiting embodiment, the mixture can be heated for a time period of from 1 hour to 5 days. In another embodiment, the mixture can be heated at a temperature of from 40°C

to 100°C. In a further non-limiting embodiment, the mixture can be heated until a theoretical value for SH content of from 0.7% to 17% is reached.

The number average molecular weight ($M_n$) of the resulting polythiol oligomer can vary widely. The number average molecular weight ($M_n$) of polythiol oligomer can be predicted based on the stoichiometry of the reaction. In alternate embodiments, the $M_n$ of polythiol oligomer can vary from 400 to 3,000grams/mole, or from 400 to 2000 grams/mole, or from 400 to 1500 grams/mole.

The viscosity of the resulting polythiol oligomer can vary widely. In alternate non-limiting embodiments, the viscosity can be from 40-4000 mPas (40 cP to 4000 cP) at 73°C, or from 40-2000 mPas (40 cP to 2000 cP) at 73°C, or from 50-150 mPas (150 cP to 1500 cP) at 73°C.

In a non-limiting embodiment, vinylcyclohexene (VCH) and 1,5-hexadiene (1,5-HD) can be combined together, and 2-mercaptoethylsulfide (DMDS) and a radical initiator (such as Vazo 52)can be mixed together, and this mixture can be added dropwise to the mixture of dienes at a rate such that a temperature of 60°C is not exceeded. After the addition is completed, the mixture can be heated to maintain a temperature of 60°C until the double bonds are essentially consumed and the pre-calculated theoretical value for SH content is reached.

In alternate embodiments, dithiol oligomer can be prepared from the following combinations of dienes and dithiol:

(a) 5-vinyl-2-norbornene (VNB), diethylene glycol divinyl ether (DEGDVE)and DMDS;
(b) 1,3-diisopropenylbenzene (DIPEB), DEGDVE and DMDS;
(c) DIPEB, VNB and DMDS;
(d) DIPEB, 4-Vinyl-1-cyclohexene (VCH), DMDS;
(e) allylmethacrylate (AM), VNB and DMDS;
(f) VCH, VNB, and DMDS;
(g) limonene(L), VNB and DMDS; and
(h) ethylene glycol dimethacrylate (EGDM), VCH and DMDS.

Examples of suitable active hydrogen-containing materials having both hydroxyl and thiol groups can include but are not limited to 2-mercaptoethanol, 3-mercapto-1,2-propanediol, glycerin bis(2-mercaptoacetate), glycerin bis(3-mercaptopropionate), 1-hydroxy-4-mercaptocyclohexane, 1,3-dimercapto-2-propanol, 2,3-dimercapto-1-propanol, trimethylolpropane bis(2-mercaptoacetate), trimethylolpropane bis(3-mercaptopropionate), pentaerythritol mono(2-mercaptoacetate), pentaerythritol bis(2-mercaptoacetate), pentaerythritol tris(2-mercaptoacetate), pentaerythritol mono(3-mercaptopropionate), pentaerythritol bis(3-mercaptopropionate), pentaerythritol tris(3-mercaptopropionate), dihydroxyethyl sulfide mono(3-mercaptopropionate), and mixtures thereof.

In an embodiment, said sulfur-containing polyurethane prepolymer of the present invention can contain disulfide linkages due to disulfide linkages contained in the polythiol and/or polythiol oligomer used to prepare said prepolymer.

In an embodiment, sulfur-containing polyurethane of the present invention can be prepared by reacting polyisocyanate and/or polyisothiocyanate with at least one material selected from tri-functional or higher-functional polyoland/or polythiol, and/or polyfunctional material containing both hydroxyl and SH groups, to form polyurethane prepolymer or sulfur-containing polyurethane prepolymer; and chain extending said prepolymer with active hydrogen-containing material, wherein said active hydrogen-containing material can include diol and/or dithiol and/or difunctional material containing both hydroxyl and SH groups, and optionally trifunctional or higher-functional polyol and/or polythiol and/or polyfunctional material containing both hydroxyl and SH groups.

In another embodiment, sulfur-containing polyurethane of the present invention can be prepared by reacting (a) polyisocyanate and/or polyisothiocyanate; (b) tri-functional or higher-functional polyol and/or polythiol and/or polyfunctional material containing both hydroxyl and SH groups; and (c) diol and/or dithiol and/or difunctional material containing both hydroxyl and SH groups;in a one-pot process.

The sulfur-containing polyurethane of the present invention can be prepared using a variety of techniques known in the art. In an embodiment, the sulfur-containing polyurethane can be prepared by introducing together polyisocyanate, polyisothiocyanate or a mixture thereof and trifunctional or higher functional polyol or polythiol or polyfunctional material containing both hydroxyl and SH groups, or mixtures thereof and allowing them to react to form polyurethane prepolymer and/or sulfur-containing polyurethane prepolymer, and then introducing active hydrogen-containing material, wherein said active hydrogen-containing material can include diol and/or dithiol and/or difunctional material containing both hydroxyl and SH groups, and optionally trifunctional or higher-functional polyol and/or polythiol and/or polyfunctional material containing both hydroxyl and SH groups, and optionally catalyst, and carrying out polymerization to form sulfur-containing polyurethane. In an embodiment, each of the aforementioned ingredients each can be degassed prior to combining them. In another embodiment, the prepolymer can be degassed, the remaining materials can be mixed together and degassed, and then the prepolymer and active hydrogen-containing material, and optionally catalyst, can be combined and allowed to react.

In another embodiment, the sulfur-containing polyurethane of the present invention can be prepared by a one-pot process; the sulfur-containing polyurethane can be prepared by intoducing together the polyisocyanate and/or polyisothiocyanate; trifunctional or higher functional polyol and/or polythioland/or polyfunctional material containing both hydroxyl and SH groups; and diol and/or dithiol and/or difunctional material containing both hydroxyl and SH groups; and optionally catalyst; and carrying out polymerization to form said sulfur-containing polyurethane. In a embodiment, each of the aforementioned ingredients each can be degassed prior to combining them.

In a embodiment, polyisocyanate and/or polyisothiocyanate and at least one material selected from tri-functional or higher-functional polyol, trifunctional or higher-functional polythiol, trifunctional or higher-functional material containing both hydroxyl and SH groups, or mixtures thereof can be combined and allowed to react to form polyurethane prepolymer or sulfur-containing polyurethane prepolymer; said prepolymer then can be reacted with amine-containing curing agent, wherein said amine-containing curing agent comprises mixture of diamine with at least one material selected from diol, dithiol, difunctional material containing both hydroxyl and SH groups, or mixture thereof, and optionally trifunctional or higher-functional polyol, trifunctional or higher-functional polythiol, and/or trifunctional or higher-functional polyamine to form or sulfur-containing polyurethane(urea) of the present invention.

In another embodiment, polyisocyanate and/or polyisothiocyanate; at least one material selected from trifunctional or higher-functional polyol, trifunctional or higher-functional polythiol, trifunctional or higher-functional material containing both hydroxyl and SH groups, or mixtures thereof; at least one material selected from diol, dithiol, difunctional material containing both hydroxyl and SH groups, or mixtures thereof; diamine; and optionally trifunctional or higher-functional polyamine can be combined together and allowed to react in a one-pot process to form or sulfur-containing polyurethane (urea).

In an embodiment wherein it is desirable to produce sulfur-containing polyurethane(ureas) having low color, the diamine-curing agent can be chosen such that it has relatively low color and/or it can be manufactured and/or stored in a manner as to prevent the amine from developing color (e.g., yellow).

Suitable diamine-containing curing agents for use in the present invention can include to materials having the following chemical formula:

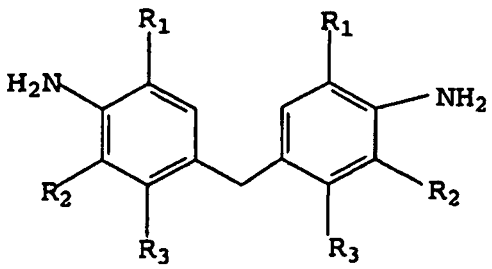

(XII')

wherein $R_1$ and $R_2$ can each be independently chosen from methyl, ethyl, propyl, and isopropyl groups, and $R_3$ can be chosen from hydrogen and chlorine. Non-limiting examples of suitable amine-containing curing agents can include but are not limited to those described in WO 2004/060951 A1 at paragraphs [0118] to [0125]

The sulfur-containing polyurethane(urea) of the present invention can be prepared using a variety of techniques known in the art. In an the polyurethane (urea) and/or sulfur-containing polyurethane (urea) can be prepared by introducing together polyisocyanate, polyisothiocyanate or a mixture thereof and trifunctional or higher functional polyol trifunctional or higher-functional polythiol, trifunctional or higher-functional material containing both hydroxyl and SH groups, or mixtures thereof and allowing them to react to form polyurethane prepolymer and/or sulfur-containing polyurethane prepolymer, and then introducing amine-containing curing agent, wherein said amine-containing curing agent comprises mixture of diamine with diol and/or dithiol and/or difunctional material containing both hydroxyl and SH groups, and optionally trifunctional or higher-functional polyol and/or polythiol and/or polyamine, and optionally catalyst, and carrying out polymerization to form sulfur-containing polyurethane (urea). In an embodiment, each of the aforementioned ingredients each can be degassed prior to combining them. In another embodiment, the prepolymer can be degassed, the remaining materials can be mixed together and degassed, and then the prepolymer and amine-containing curing agent, and optionally catalyst, can be combined and allowed to react.

In another embodiment, the containing polyurethane(urea) of the present invention can be prepared by a one-pot process; the sulfur-containing polyurethane (urea) can be prepared by intoducing together the polyisocyanate and/or polyisothiocyanate; trifunctional or higher functional polyol, trifunctional or higher-functional polythiol, trifunctional or higher-funtional material containing both hydroxyl and SH groups, or mixtures thereof; diol, dithiol, difunctional material containing both hydroxy and SH groups, or mixtures thereof; diamine and optionally trifunctional or higher-functional polyamine; and optionally catalyst; and carrying out polymerization to form sulfur-containing polyurethane (urea). In an embodiment, each of the aforementioned ingredients each can be degassed prior to combining them.

Suitable catalysts can be selected from those known in the art. Examples can include tertiary amine catalysts or tin compounds or mixtures thereof. In alternate non-limiting embodiments, the catalysts can be dimethyl cyclohexylamine or dibutyl tin dilaurate or mixtures thereof. In further non-limiting embodiments, degassing can take place prior to or following addition of catalyst.

In another embodiment, wherein a lens can be formed, the mixture which can be optionally degassed can be introduced into a mold and the mold can be heated (i.e., thermal cure cycle) using a variety of conventional techniques known in the art. The thermal cure cycle can vary depending on the reactivity and molar ratio of the reactants. In an embodiment, the thermal cure cycle can include heating the mixture of prepolymer, and dithiol and/or diol, or prepolymer, diamine and dithiol and/or diol; or heating the mixture of polyisocyanate and/or polyisothiocyanate, polyol and/or polythiol, and dithiol and/or diol, or polyisocyanate and/or polyisothiocyanate, polyol and/or polythiol, diamine and dithiol and/or diol,from room temperature to a temperature of 200°C over a period of from 0.5 hours to 120 hours; or from 80 to 150°C for a period of from 5 hours to 48 hours.

In an embodiment, a urethanation catalyst can be used in the present invention to enhance the reaction of the polyurethane-forming materials. Suitable urethanation catalysts can vary, for example, suitable urethanation catalysts can include those catalysts that are useful for the formation of urethane by reaction of the NCO and OH-containing materials and/or NCO and SH-containing materials. Non-limiting examples of suitable catalysts can be chosen from the group of Lewis bases, Lewis acids and insertion catalysts as described in Ullmann's Encyclopedia of Industrial Chemistry, 5th Edition, 1992, Volume A21, pp. 673 to 674. In an embodiment, the catalyst can be a stannous salt of an organic acid, such as but not limited to stannous octoate, dibutyl tin dilaurate, dibutyl tin diacetate, dibutyl tin mercaptide, dibutyl tin dimaleate, dimethyl tin diacetate, dimethyl tin dilaurate, 1,4-diazabicyclo[2.2.2]octane, and mixtures thereof. In alternate embodiments, the catalyst can be zinc octoate, bismuth, or ferric acetylacetonate.

Further non-limiting examples of suitable catalysts can include tin compounds such as dibutyl tin dilaurate, phosphines, tertiary ammonium salts and tertiary amines such as but not limited to triethylamine, triisopropylamine, dimethyl cyclohexylamine, N,N-dimethylbenzylamine and mixtures thereof. Such suitable tertiary amines are disclosed in United States Patent 5, 693, 738 at column 10, lines 6-38.

In alternate embodiments, various known additives can be incorporated into the sulfur-containing polyurethane and/or sulfur-containing polyurethane(urea) of the present invention. Such additives can include but are not limited to light stabilizers, heat stabilizers, antioxidants, ultraviolet light absorbers, mold release agents, static (non-photochromic) dyes, pigments and flexibilizing additives, such as alkoxylated phenol benzoates and poly(alkylene glycol) dibenzoates. Examples of anti-yellowing additives can include 3-methyl-2-butenol, organo pyrocarbonates and triphenyl phosphite (CAS registry no. 101-02-0). Such additives can be present in an amount such that the additive constitutes less than 10 percent by weight, or less than 5 percent by weight, or less than 3 percent by weight, based on the total weight of the prepolymer. In alternate embodiments, the aforementioned optional additives can be mixed with the polyisocyanate and/or polyisocyanate. In a further embodiment, the optional additives can be mixed with active hydrogen-containing material.

In an embodiment, the polymerizable composition of the present invention can be subjected to curing conditions (such as thermal curing, for example) until it is at least partially cured. In embodiments, the term "at least partially cured," can mean subjecting the polymerizable composition to curing conditions, wherein reaction of at least a portion of the reactive end-groups of said composition occurs, to form a solid polymerizate, such that said polymerizate can be demolded, and cut into test pieces, or such that it can be subjected to machining operations, including optical lens processing, or such that it is suitable for optical or ophthalmic lens applications.

In an alternate embodiment, the polymerizable composition can be subjected to curing conditions (such as thermal curing, for example), such that a state of substantially complete cure is attained, wherein further curing under the same conditions results in no significant further improvement of polymer properties, such as hardness.

In an embodiment, the resulting sulfur-containing polyurethane, and sulfur-containing polyurethane(urea) of the present invention when cured can be solid, and essentially transparent such that it is suitable for optical or ophthalmic lens applications. In alternate embodiments, the sulfur-containing polyurethane, and sulfur-containing polyurethane (urea) can have a refractive index of at least 1.50, or at least 1.53, or at least 1.55, or at least 1.56, or at least 1.57, or at least 1.58, or at least 1.59, or at least 1.60, or at least 1.62, or at least 1.65. In further alternate embodiments, sulfur-containing polyurethane, and/or sulfur-containing polyurethane(urea) when cured can have an Abbe number of at least 30, or at least 32, or at least 35, or at least 38, or at least 39, or at least 40, or at least 44.

In embodiments, the sulfur-containing polyurethane, and/or sulfur-containing polyurethane(urea) when cured can have adequately high hardness. In a embodiment, hardness can be measured in accordance with ISO standard test method BS EN ISO 14577-1:2002, using a Fischer Scope H-100 instrument, supplied by Fischer Technology, Inc., and reported as Martens Hardness, in the units of Newtons (N) /$mm^2$.

In embodiment, the polyurethane or sulfur-containing polyurethane of the present invention when cured can have Martens Hardness (HM 0.3/15/0) of greater than 80, or greater than 100, or greater than 110, or greater than 120, or greater than 130 Newton/$mm^2$; or less than 220, or less than 200 Newton/$mm^2$.

In embodiment, the sulfur-containing polyurethane(urea) of the present invention when cured can have Martens Hardness (HM 0.3/15/0) of greater than 80, or greater than 100, or greater than 110, or greater than 120, or greater than 140 Newton/$mm^2$; or less than 250, or less than 200 Newton/$mm^2$.

In embodiments, the sulfur-containing polyurethane and/or sulfur-containing polyurethane(urea) when cured can have adequately high thermal properties. In an embodiment, thermal properties can be measured in accordance with ASTM D648 Method B, using an HDT Vicat instrument, supplied by CEAST USA, Inc Further, in a non-limiting embodiment, thermal properties of a polymerizate can be reported as Heat Distortion Temperature (i.e., temperature at which 0.254 mm (10 mils) deflection occurs).

In an embodiment, the sulfur-containing polyurethane of the present invention when cured can have Heat Distortion Temperature of at least 80°C, or at least 90 °C, or at least 100 °C or at least 110 °C.

In another embodiment, the sulfur-containing polyurethane (urea) of the present invention when cured can have Heat Distortion Temperature of at least 80°C, or at least 100 °C, or at least 120 °C or at least 140 °C.

In embodiment, the sulfur-containing polyurethane, or sulfur-containing polyurethane(urea) when cured can demonstrate good impact resistance/strength. Impact resistance can be measured using a variety of conventional methods known to one skilled in the art.

In an embodiment, the impact resistance can be measured using the Impact Energy Test as previously described herein and in the Examples.

In alternate embodiments, using the Impact Energy Test as described herein, sulfur-containing polyurethane (urea) of the present invention when cured can produce a polymerizate with impact strength of at least 1.0 Joule, or at least 2.0 Joules, or at least 4.95 Joules.

In embodiment, the sulfur-containing polyurethane, or sulfur-containing polyurethane(urea) of the present invention when cured can have low density. In embodiments, the density can be from 1.0 to less than 1.3 grams/$cm^3$, or from 1.0 to less than 1.4 grams/$cm^3$, or from 1.0 to less than 1.45 grams/$cm^3$, or from 1.1 to less than 1.45 grams/$cm^3$, or from 1.1 to less than 1.4 grams/$cm^3$, or from 1.1 to less than 1.3 grams/$cm^3$. In an embodiment, the density is measured using a DensiTECH instrument manufactured by Tech Pro, Incorporated. In a further non-limiting embodiment, the density is measured in accordance with ASTM D297.

Solid articles that can be prepared using the sulfur-containing polyurethane, or sulfur-containing polyurethane (urea) polymerizate of the present invention include to optical lenses, such as plano and ophthalmic lenses, sun lenses, windows, automotive transparencies, such as windshields, sidelights and backlights, and aircraft transparencies.

In an embodiment, the sulfur-containing polyurethane, or sulfur-containing polyurethane(urea) polymerizate of the present invention can be used to prepare photochromic articles, such as lenses. In a further embodiment, the polymerizate can be transparent to that portion of the electromagnetic spectrum which activates the photochromic substance(s), i.e., that wavelength of ultraviolet (UV) light that produces the colored or open form of the photochromic substance and that portion of the visible spectrum that includes the absorption maximum wavelength of the photochromic substance in its UV activated form, i.e., the open form.

A wide variety of photochromic substances can be used in the present invention. In a non-limiting embodiment, organic photochromic compounds or substances can be used. In alternate non-limiting embodiments, the photochromic substance can be incorporated, e.g., dissolved, dispersed or diffused into the polymerizate, or applied as a coating thereto.

Examples of suitable photochromic materials and ways of making photochromic articles can include but are not limited to those described in WO 2004/060951 A1 at paragraphs [0151] to [0163].

## EXAMPLES

### Experimental Methods for Characterizing Compositions and Properties

In the following examples, unless otherwise stated, the refractive index and Abbe number were measured on a multiple wavelength Abbe Refractometer Model DR-M2 manufactured by ATAGO Co., Ltd.; the refractive index and Abbe number of liquids were measured in accordance with ASTM-D1218; the refractive index and Abbe number of solids was measured in accordance with ASTM-D-542.

The density of solids was measured in accordance with ASTM-D792.

The viscosity was measured using a Brookfield CAP 2000+ Viscometer.

Percent Haze was measured in accordance with ASTM-D1003, using a ColorQuest XE instrument, manufactured by Hunter Associates Laboratory, Inc.

Hardness was measured in accordance with ISO standard test method BS EN ISO 14577-1:2002, using a Fischer Scope H-100 instrument, supplied by Fischer Technology, Inc., and was reported as Martens Hardness (HM 0.3/15/0), in the units of Newtons(N)/$mm^2$. As requireed in said standard test method, the following test parameters were specified: Maximum Total Load applied to sample was 0.3 Newtons (N), time period over which Maximum Total Load was applied to sample was 15 seconds, and the time of duration for which said Maximum Total Load was then applied

to sample was 0 seconds. Therefore, the test results were designated with the term "HM 0.3/15/0" in order to reflect these three test parameters.

Heat Distortion Temperature (i.e., temperature at which deflection of 0.254 mm (10 mils) of the sample bar occurs) and Total Deflection Temperature (i.e., temperature at which deflection of 2.54 mm (100 mils) of the sample bar occurs), were measured in accordance with ASTM D648 Method B, using an HDT Vicat instrument, supplied by CEAST USA, Inc.

Impact testing was accomplished in accordance with the Impact Energy Test, as described herein, and the results are reported in energy units (Joules). The Impact Energy Test consists of testing a flat sheet sample of polymerizate having a thickness of 3mm, and cut into a square piece approximately 4cm x 4cm. Said flat sheet sample of polymerizate is supported on a flat O-ring which is attached to top of the pedestal of a steel holder, as defined below. Said O-ring is constructed of neoprene having a hardness of 40 $\pm$ 5 Shore A durometer, a minimum tensile strength of 8.3 MPa, and a minimum ultimate elongation of 400 percent, and has an inner diameter of 25 mm, an outer diameter of 31 mm, and a thickness of 2.3 mm. Said steel holder consists of a steel base, with a mass of approximately 12 kg, and a steel pedestal affixed to said steel base. The shape of said steel pedestal is approximated by the solid shape which would result from adjoining onto the top of a cylinder, having an outer diameter of 75 mm and a height of 10 mm, the frustum of a right circular cone, having a bottom diameter of 75 mm, a top diameter of 25 mm, and a height of 8 mm, wherein the center of said frustum coincides with the center of said cylinder. The bottom of said steel pedestal is affixed to said steel base, and the neoprene O-ring is centered and affixed to the top of the steel pedestal. The flat sheet sample of polymerizate is centered and set on top of the O-ring. The Impact Energy Test is carried out by dropping steel balls of increasing weight from a distance of 50 inches (1.27 meters) onto the center of the flat sheet sample. The sheet is determined to have passed the test if the sheet does not fracture. The sheet is determined to have failed the test when the sheet fractures. As used herein, the term "fracture" refers to a crack through the entire thickness of the sheet into two or more separate pieces, or detachment of one or more pieces of material from the backside of the sheet (i.e., the side of the sheet opposite the side of impact). The impact strength of the sheet is reported as the impact energy that corresponds to the highest level (i.e., largest ball) at which the sheet passes the test, and it is calculated acording to the following formula:

$$E=mgd$$

Wherein E represent impact energy in Joules (J), m represents mass of the ball in kilograms (kg), g represents acceleration due to gravity (i.e., 9.80665 m/sec$^2$) and d represents the distance of the ball drop in meters (i.e., 1.27 m).

The NCO concentration of the prepolymer (Component A) was determined by reaction with an excess of n-dibutylamine (DBA) to form the corresponding urea followed by titration of the unreacted DBA with HCl in accordance with the following procedure.

REAGENTS

1. Tetrahydrofuran (THF), reagent grade.
2. 80/20 THF/propylene glycol (PG) mix. This solution was prepared in-lab by mixing 800 mls PG with 3.2 liters of THF in a 4-liter bottle.
3. DBA, dibutylamine certified ACS.
4. DBA/THF solution. 150 mL of DBA was combined with 750 mL of THF; it was mixed well and transfered to an amber bottle.
5. Hydrochloric acid, concentrated. ACS certified.
6. Isopropanol, technical grade.
7. Alcoholic hydrochloric acid, 0.2N. 75 ml of conc. HCl was slowly added to a 4-liter bottle of technical grade isopropanol while stirring with a magnetic stirrer; it was mixed for a minimum of 30 minutes. This solution was standardized using THAM (Tris hydroxyl methyl amino methane) asfollows: Into a glass 100-mL beaker, was weighed approximately 0.6 g $(HOCH_2)_3CNH_2$ primary standard to the nearest 0.1 mg and the weight was recorded. 100 mL DI water was added and mixed to dissolve and titrated with the prepared alcoholic HCl.

This procedure was repeated a minimum of one time and the values were averaged using the calculation below.

$$\text{Normality HCL} = \frac{(\text{Standard wt., grams})}{(\text{mLs HCl})\ (0.12114)}$$

EQUIPMENT

1. Polyethylene beakers, 200-mL, Falcon specimen beakers, No. 354020.
2. Polyethylene lids for above, Falcon No. 354017.
3. Magnetic stirrer and stirring bars.
4. Brinkmann dosimeter for dispensing or 10-mL pipet.
5. Autotitrator equipped with pH electrode.
6. 25-mL, 50-mL dispensers for solvents or 25-mL and 50-mL pipets.

PROCEDURE

1. Blank determination: Into a 220-mL polyethylene beaker was added 50 mL THF followed by 10.0 mL DBA/THF solution. The solution was capped and mixed with magnetic stirring for 5 minutes. 50 mL of the 80/20 THF/PG mix was added and titrated using the standardized alcoholic HCl solution and this volume was recorded. This procedure was repeated and these values averaged for use as the blank value.
2. In a polyethylene beaker was weighed 1.0 gram of prepolymer sample and the weight was recorded to the nearest 0.1 mg. 50 mL THF was added, the sample was capped and allowed to dissolve with magnetic stirring.
3. 10.0 mL DBA/THF solution was added, the sample was capped and allowed to react with stirring for 15 minutes.
4. 50 mL of 80/20 THF/PG solution was added.
5. The beaker was placed on the titrator and the titration was started. This procedure was repeated.

CALCULATIONS

$$\%\text{NCO} = \frac{(\text{mls Blank} - \text{mls Sample}) \times (\text{Normality HCl}) \times (4.2018)}{\text{Sample weight, g}}$$

$$\text{IEW} = \frac{(\text{Sample wt., grams}) \times (1000)}{(\text{mls Blank} - \text{mls Sample}) \times (\text{Normality HCl})}$$

IEW = Isocyanate Equivalent Weight

The SH groups within the product were determined using the following procedure. A sample size (0.1 mg) of the product was combined with 50 mL of tetrahydrofuran (THF)/propylene glycol (80/20) and stirred at room temperature until the sample was substantially dissolved. While stirring, 25.0 mL of 0.1 N iodine solution (which was commercially obtained from Aldrich 31, 8898-1) was added to the mixture and then allowed to react for a time period of from 5 to 10 minutes. To this mixture was added 2.0 mL concentrated HCl. The mixture was then titrated potentiometrically with 0.1 N sodium thiosulfate in the millivolt (mV) mode. A blank value was initially obtained by titrating 25.0 mL iodine (including 1 mL of concentrated hydrochloric acid) with sodium thiosulfate in the same manner as conducted with the product sample.

$$\%SH = \frac{(\text{mls Blank} - \text{mls Sample}) \times (\text{Normality } NA_2S_2O_3) \times (3.307)}{\text{Sample weight, g}}$$

Example 1. Synthesis of Polyurethane Prepolymer 1

4,4'-methylenebis (cyclohexyl isocyanate) (Desmodur W) (1.0 molar equivalent) was charged into a reactor with $N_2$ pad and heated to a temperature of 70°C. Then, 1, 1, 1 tris(hydroxymethyl) propane (TMP) (0.2 molar equivalent) was added to the reactor. When introduced into the reactor, the TMP dissolved slowly. During the slow dissolution the reaction underwent a short induction period prior to exhibiting a significant exotherm in temperature (approximately, $\Delta$ = 50°C). Care was taken to minimize the extent of the exotherm by keeping the reaction temperature below 120°C, which was achieved by adding the TMP to the reactor in portions. Once all of the TMP was added, the resultant reaction mixture was heated for 20 hours in the reactor at a temperature within the range of from 110-120°C. This reaction mixture represented Component A.

Prepolymer 1 had %NCO of 23.74% and viscosity of 90 cP at 73°C.

Prepolymer 2 and Prepolymer 3 were synthesized according to the same procedure as Prepolymer 1, with the stoichiometry given in Table 1.

Table 1. Polyurethane Prepolymer Preparation

| Prepolymer (Component A) | TMP[1] (Molar Equiv) | Des W[2] (Molar Equiv) | NCO (%) | Viscosity 73°C (cP) |
|---|---|---|---|---|
| Prepolymer 1 | 0.20 | 1.00 | 23.74 | 90 |
| Prepolymer 2 | 0.28 | 1.00 | 20.75 | 2103 |
| Prepolymer 3 | 0.30 | 1.00 | 20.63 | 7000 |
| [1]- TMP - 1,1,1-Tris(hydroxymethyl)propane, obtained from Aldrich, USA<br>[2]- Des W - 4,4'-Methylenebis(cyclohexyl isocyanate), Bayer Corporation | | | | |

Table 2: Selected Properties of Chain Extended Polyurethane/Sulfur-containing Polyurethane Polymers

| Polymer (Components A+B) | Component A | Component B (Molar Equiv.) | Refractive Index Abbe | Impact** (J) | Haze* (%) |
|---|---|---|---|---|---|
| Polymer 1 | Prepolymer 2 | DMDS (1.0) | 1.570, 44 | 2.47 J | 1.39 |
| Polymer 2 | Prepolymer 1 | DMDS (1.0) | 1.570, 43 | 13.3 J | 0.38 |

Description of the abbreviations in Table 2:

BDO - 1,4-Butanediol, obtained from Aldrich, USA

DMDS - 2-Mercaptoethyl sulfide, obtained from Nisso-Maruzen Chemical Company, Japan

Example 2. Chain extension of polyurethane prepolymer 2 with DMDS (Polymer 1)

Prepolymer 2 (1.0 eq.) was mixed together with DMDS (1.0 eq.) using two component reaction injection molding equipment. The temperature of the two components when mixed was 25°C for DMDS and 70°C for Prepolymer 2. The resultant reaction mixture was then introduced into a 3 mm thick flat sheet and ophthalmic lens mold set-up. The flat sheet and lens mold set-ups were then placed in a convection oven and heated. The materials were heated at a temperature of 110°C for 76 hours. After the heating period, the temperature of the oven was reduced to 80°C over a 30-minute time interval. The materials were then removed from the oven and demolded. The resultant polymerizate, Polymer 2, had the following properties: refractive index ($n_e^{20}$) 1.570, Abbe Number 44, Impact strength 2.47 Joules, Haze 1.39%, Martens Microhardness (HM 0.3/15/0) 132 N/mm$^2$, Heat Distortion Temperature 101 °C; Total Deflection

Temperature 105 °C.

Example 3. Chain extension of polyurethane prepolymer 1 with DMDS (Polymer 2)

Prepolymer 1 (1.0 eq.) was mixed together with DMDS (1.0 eq.) using two component reaction injection molding equipment. The temperature of the two components when mixed was 25°C for DMDS and 70°C for Prepolymer 1. The resultant reaction mixture was then introduced into a 3 mm thick flat sheet and ophthalmic lens mold set-up. The flat sheet and lens mold set-ups were then placed in a convection oven and heated. The materials were heated at a temperature of 110°C for 76 hours. After the heating period, the temperature of the oven was reduced to 80°C over a 30-minute time interval. The materials were then removed from the oven and demolded. The resultant polymerizate, Polymer 3, had the following properties: refractive index ($n_e^{20}$) 1.570, Abbe Number 43, Impact strength 13.3 Joules, Haze 0.38%, Martens Microhardness (HM 0.3/15/0) 118 N/mm$^2$, Heat Distortion Temperature 95°C; Total Deflection Temperature 106 °C.

Table 3. Polyurethane Prepolymer Preparation

| Prepolymer (Component A) | TMP[1] (Molar Equiv) | Des W[2] (Molar Equiv) | Reaction time at 110°C 120°C (h) | NCO (%) | Viscosity 73°C (cP) |
|---|---|---|---|---|---|
| Prepolymer 1 | 0.20 | 1.00 | 20 | 23.74 | 90 |
| Prepolymer 3 | 0.30 | 1.00 | 24 | 20.63 | 7000 |
| [1]- TMP - 1,1,1-Tris(hydroxymethyl)propane, obtained from Aldrich, USA<br>[2]- Des W - 4,4'-methylenebis(cyclohexyl isocyanate, Bayer Corporation | | | | | |

Example 4. Chain extension of polyurethane Prepolymer 1 with a mixture of DMDS and aromatic diamine (Polymer 3)

Prepolymer 1 (1.0 eq.) was mixed together with a mixture of DMDS (dimercaptodiethylsulfide) (0.8 eq.) and DETDA (3,5-diethyl-2,4-toluenediamine and 3,5-diethyl-2,6-toluenediamine, mixture approximately 80%/20%) (0.2 eq.) using two component reaction injection molding equipment. The temperature of the two components when mixed was 25°C for DMDS/DETDA mixture and 70°C for Prepolymer 1. The resultant reaction mixture was then introduced into a 3 mm thick flat sheet and ophthalmic lens mold set-up. The flat sheet and mold set-up were then placed in a convection oven and heated. The materials were heated at a temperature of 110°C for 76 hours. After the heating period, the temperature of the oven was reduced to 80°C over a 30-minute time interval. The materials were then removed from the oven and demolded. The resultant polymerizate, Polymer 4, had the following properties: refractive index ($n_e^{20}$) 1.565, Abbe Number 43, Impact strength 3.2 Joules, Haze 0.72%, Martens Microhardness (HM 0.3/15/0) 130 N/mm$^2$, Heat Distortion Temperature 105 °C; Total Deflection Temperature 117 °C.

## Claims

1. Sulfur-containing polyurethane comprising the reaction product of:

   (a) material chosen from polyisocyanate, polyisothiocyanate or mixtures thereof;
   (b) material chosen from trifunctional or higher-functional polyol having molecular weight of less than or equal to 200 grams/mole, trifunctional or higher-functional polythiol having molecular weight of less than or equal to 700 grams/mole, trifunctional or higher-functional material containing both hydroxyl and SH groups having molecular weight of less than or equal to 700 grams/mole, and mixtures thereof; and
   (c) material chosen from diol having molecular weight of less than or equal to 200 grams/mole, dithiol having molecular weight of less than or equal to 600 grams/mole, difunctional material containing both hydroxyl and SH groups having molecular weight of less than or equal to 600 grams/mole, and mixtures thereof, wherein at least one of (a), (b) or (c) is sulfur-containing.

2. The sulfur-containing polyurethane of claim 1 wherein said dithiol in (c) comprises dithiol oligomer having number average molecular weight of less than or equal to 600 grams/mole, with the proviso that said dithiol oligomer constitutes less than or equal to 70 mole percent of (c) reactant.

3. A method of preparing sulfur-containing polyurethane comprising:

(I)

(a) reacting at least one of polyisocyanate, or polyisothiocyanate or mixture thereof with at least one of trifunctional or higher-functional polyol having molecular weight of less than or equal to 200 grams/mole, trifunctional or higher-functional polythiol having molecular weight of less than or equal to 700 grams/mole, trifunctional or higher-functional material containing both hydroxyl and SH groups having molecular weight of less than or equal to 700 grams/mole, or mixtures thereof; to form polyurethane prepolymer, and
(b) reacting said prepolymer with at least one active hydrogen-containing material chosen from diol having molecular weight of less than or equal to 200 grams/mole, dithiol having molecular weight of less than or equal to 600 grams/mole, difunctional material containing both hydroxyl and SH groups having molecular weight of less than or equal to 600 grams/mole, or mixtures thereof,
wherein at least one of (a) or (b) is sulfur-containing; or

(II) reacting

(a) at least one material chosen from polyisocyanate, polyisothiocyanate or mixtures thereof;
(b) at least one material chosen from trifunctional or higher-functional polyol having molecular weight of less than or equal to 200 grams/mole, trifunctional or higher-functional polythiol having molecular weight of less than or equal to 700 grams/mole, trifunctional or higher-functional material containing both hydroxyl and SH groups having molecular weight of less than or equal to 700 grams/mole, or mixtures thereof; and
(c) at least one material chosen from diol having molecular weight of less than or equal to 200 grams/mole, dithiol having molecular weight less of than or equal to 600 grams/mole, difunctional material containing both hydroxyl and SH groups having molecular weight of less than or equal to 600 grams/mole, or mixtures thereof,
in a one-pot process, wherein at least one of (a), (b) or (c) is sulfur-containing.

**4.** A sulfur-containing polyurethane(urea) comprising the reaction product of:

(a) at least one of polyisocyanate, polyisothiocyanate or mixture thereof;
(b) at least one of trifunctional or higher-functional polyol having molecular weight of less than or equal to 200 grams/mole, trifunctional or higher-functional material containing both hydroxyl and SH groups having molecular weight of less than or equal to 700 grams/mole, trifunctional or higher-functional polythiol having molecular weight of less than or equal to 700 grams/mole, or mixture thereof;
(c) at least one of diol having molecular weight of less than or equal to 100 grams/mole, dithiol having molecular weight of less than or equal to 600 grams/mole difunctional material containing both hydroxyl and SH groups having molecular weight of less than or equal to 600 grams/mole, or mixture thereof; and
(d) diamine,

wherein at least one of (a), (b) and (c) is sulfur-containing.

**5.** The sulfur-containing polyurethane(urea) of claim 4 wherein said dithiol in (c) comprises dithiol oligomer having number average molecular weight of less than or equal to 600 grams/mole, with the proviso that said dithiol oligomer constitutes less than or equal to 70 mole percent of reactant in (c).

**6.** The sulfur-containing polyurethane(urea) of claim 4 prepared by

(I) reacting (a) and (b) to form a polyurethane prepolymer, being preferably sulfur containing wherein preferably said sulfur-containing polyurethane prepolymer comprises the reaction product of:

(a) at least one of polyisocyanate, polyisothiocyanate or mixture thereof: and
(b) at least one of trifunctional or higher-functional polythiol or a mixture of trifunctional or higher-functional polythiol and trifunctional or higher-functional polyol

and chain-extending said prepolymer with (c) and (d),
wherein (d) optionally further comprises material chosen from trifunctional or higher-functional polyamine, trifunctional or higher-functional polyol, trifunctional or higher functional polythiol having molecular weight of less than or equal to 700, trifunctional or higher functional material containing both hydroxyl and SH groups having molecular weight of less than or equal to 700, and mixtures thereof; or

(II) reacting (a), (b), (c), and (d) In a one-pot process.

**7.** A method of preparing sulfur-containing polyurethane(urea), comprising

(I) reacting

(a) material chosen from polylsocyanate, polyisothiocyanate and mixtures thereof, and
(b) material chosen from trifunctional or higher-functional polyol having molecular weight of less than or equal to 200 grams/mole, trifunctional or higher-functional polythiol having molecular weight less of than or equal to 700 grams/mole, trifunctional or higher-functional material containing both hydroxyl and SH groups having molecular weight of less than or equal to 700 grams/mole, and mixtures thereof, to form polyurethane prepolymer ; and
reacting said prepolymer with
(c) material chosen from diol having molecular weight of less than or equal to 200 grams/mole, dithiol having molecular weight of less than or equal to 600 grams/mole, difunctional material containing both hydroxyl and SH groups having molecular weight of less than or equal to 600 grams/mole, and mixtures thereof; and
(d) diamine,
wherein at least one of (a), (b) and (c) is sulfur-containing, or

(II) reacting in a in a one-pot process:

(a) material chosen from polyisocyanate, polyisothiocyanate or mixtures thereof;
(b) material chosen from trifunctional or higher-functional polyol having molecular weight of less than or equal to 200 grams/mole, trifunctional or higher-functional polythiol having molecular weight of less than or equal to 700 grams/mole, trifunctional or higher-functional material containing both hydroxyl and SH groups having molecular weight of less than or equal to 700 grams/mole, and mixtures thereof;
(c) material chosen from diol having molecular weight of less than or equal to 200 grams/mole, dithiol having molecular weight less of than or equal to 600 grams/mole, difunctional material containing both hydroxyl and SH groups having molecular weight of less than or equal to 600 grams/mole, and mixtures thereof; and
(d) diamine,

wherein at least one of (a), (b) and (c) is sulfur-containing.

## Patentansprüche

**1.** Schwefelhaltiges Polyurethan umfassend das Reaktionsprodukt von:

(a) Stoff ausgewählt aus Polyisocyanat, Polyisothiocyanat oder Mischungen davon,
(b) Stoff ausgewählt aus trifunktionellem oder höherfunktionellem Polyol mit einem Molekulargewicht von weniger als oder gleich 200 g/mol, trifunktionellem oder höherfunktionellem Polythiol mit einem Molekulargewicht von weniger als oder gleich 700 g/mol, trifunktionellem oder höherfunktionellem Stoff, der sowohl Hydroxylals auch SH-Gruppen enthält, mit einem Molekulargewicht von weniger als oder gleich 700 g/mol und Mischungen davon und
(c) Stoff ausgewählt aus Diol mit einem Molekulargewicht von weniger als oder gleich 200 g/mol, Dithiol mit einem Molekulargewicht von weniger als oder gleich 600 g/mol, difunktionellem Stoff, der sowohl Hydroxyl- als auch SH-Gruppen enthält, mit einem Molekulargewicht von weniger als oder gleich 600 g/mol und Mischungen davon, wobei wenigstens einer von (a), (b) oder (c) schwefelhaltig ist.

**2.** Schwefelhaltiges Polyurethan nach Anspruch 1, wobei dieses Dithiol in (c) Dithiololigomer mit einem zahlenmittleren Molekulargewicht von weniger als oder gleich 600 g/mol umfasst, unter der Voraussetzung, dass dieses Dithiololigomer weniger als oder gleich 70 mol-% des Reaktanten (c) ausmacht.

**3.** Verfahren zur Herstellung von schwefelhaltigem Polyurethan umfassend:

(I)

(a) Umsetzen wenigstens eines Polyisocyanats oder Polyisothiocyanats oder Mischung davon mit wenigstens einem aus trifunktionellem oder höherfunktionellem Polyol mit einem Molekulargewicht von weniger als oder gleich 200 g/mol, trifunktionellem oder höherfunktionellem Polythiol mit einem Molekulargewicht von weniger als oder gleich 700 g/mol, trifunktionellem oder höherfunktionellem Stoff, der sowohl Hydroxyl- als auch SH-Gruppen enthält, mit einem Molekulargewicht von weniger als oder gleich 700 g/mol oder Mischungen davon, um ein Polyurethanprepolymer zu bilden, und

(b) Umsetzen dieses Prepolymers mit wenigstens einem aktiven Wasserstoff enthaltendem Stoff ausgewählt aus Diol mit einem Molekulargewicht von weniger als oder gleich 200 g/mol, Dithiol mit einem Molekulargewicht von weniger als oder gleich 600 g/mol, difunktionellem Stoff, der sowohl Hydroxyl- als auch SH-Gruppen enthält, mit einem Molekulargewicht von weniger als oder gleich 600 g/mol oder Mischungen davon,

wobei wenigstens einer von (a) oder (b) schwefelhaltig ist, oder

(II) Umsetzen von

(a) wenigstens einem Stoff ausgewählt aus Polyisocyanat, Polyisothiocyanat oder Mischungen davon,

(b) wenigstens einem Stoff ausgewählt aus trifunktionellem oder höherfunktionellem Polyol mit einem Molekulargewicht von weniger als oder gleich 200 g/mol, trifunktionellem oder höherfunktionellem Polythiol mit einem Molekulargewicht von weniger als oder gleich 700 g/mol, trifunktionellem oder höherfunktionellem Stoff, der sowohl Hydroxyl- als auch SH-Gruppen enthält, mit einem Molekulargewicht von weniger als oder gleich 700 g/mol oder Mischungen davon, und

(c) wenigstens einem Stoff ausgewählt aus Diol mit einem Molekulargewicht von weniger als oder gleich 200 g/mol, Dithiol mit einem Molekulargewicht von weniger als oder gleich 600 g/mol, difunktionellem Stoff, der sowohl Hydroxylals auch SH-Gruppen enthält, mit einem Molekulargewicht von weniger als oder gleich 600 g/mol oder Mischungen davon,

in einem Ein-Topf-Verfahren, wobei wenigstens einer von (a), (b) oder (c) schwefelhaltig ist.

**4.** Schwefelhaltiger Polyurethanharnstoff umfassend das Reaktionsprodukt von:

(a) wenigstens einem Polyisocyanat, Polyisothiocyanat oder Mischungen davon,

(b) wenigstens einem aus trifunktionellem oder höherfunktionallem Polyol mit einem Molekulargewicht von weniger als oder gleich 200 g/mol, trifunktionellem oder höherfunktionellem Stoff, der sowohl Hydroxyl- als auch SH-Gruppen enthält, mit einem Molekulargewicht von weniger als oder gleich 700 g/mol, trifunktionellem oder höherfunktionellem Polythiol mit einem Molekulargewicht von weniger als oder gleich 700 g/mol oder Mischungen davon,

(c) wenigstens einem Diol mit einem Molekulargewicht von weniger als oder gleich 100 g/mol, Dithiol mit einem Molekulargewicht von weniger als oder gleich equal to 600 g/mol, difuktionellem Stoff, der sowohl Hydroxyl- als auch SH-Gruppen enthält, mit einem Molekulargewicht von weniger als oder gleich 600 g/mol oder Mischungen davon und

(d) Diamin,

wobei wenigstens einer von (a), (b) und (c) schwefelhaltig ist.

**5.** Schwefelhaltiger Polyurethanharnstoff nach Anspruch 4, wobei dieses Dithiol in (c) Dithiololigomer mit einem zahlenmittleren Molekulargewicht von weniger als oder gleich 600 g/mol umfasst, unter der Voraussetzung, dass dieses Dithiololigomer weniger als oder gleich 70 mol-% des Reaktanten in (c) ausmacht.

**6.** Schwefelhaltiger Polyurethanharnstoff nach Anspruch 4 hergestellt durch

(I) Umsetzen von (a) und (b), um ein Polyurethanprepolymer zu bilden, das vorzugsweise schwefelhaltig ist, wobei vorzugsweise dieses schwefelhaltige Polyurethanprepolymer das Reaktionsprodukt von

(a) wenigstens einem Polyisocyanat, Polyisothiocyanat oder Mischungen davon und

(b) wenigstens einem aus trifunktionellem oder höherfunktionellem Polythiol oder einer Mischung von trifunktionellem oder höherfunktionellem Polythiol und trifunktionellem oder höherfunktionellem Polyol

enthält,

und Kettenverlängern dieses Prepolymers mit (c) und (d), worin (d) optional zusätzlich Stoff enthält, der ausgewählt ist aus trifunktionellem oder höherfunktionellem Polyamin, trifunktionellem oder höherfunktionellem

Polyol, trifunktionellem oder höherfunktionellem Polythiol mit einem Molekulargewicht von weniger als oder gleich 700 g/mol, trifunktionellem oder höherfunktionellem Stoff, der sowohl Hydroxyl- als auch SH-Gruppen enthält, mit einem Molekulargewicht von weniger als oder gleich 700 g/mol und Mischungen davon oder
(II) Umsetzen von (a), (b), (c) und (d) in einem Ein-Topf-Verfahren,

**7.** Verfahren zur Herstellung von schwefelhaltigem Polyurethanharnstoff umfassend

(II) Umsetzen von

(a) Stoff ausgewählt aus Polyisocyanat, Polyisothiocyanat und Mischungen davon und
(b) Stoff ausgewählt aus trifunktionellem oder höherfunktionellem Polyol mit einem Molekulargewicht von weniger als oder gleich 200 g/mol, trifunktionellem oder höherfuriktionellem Polythiol mit einem Molekulargewicht von weniger als oder gleich 700 g/mol, trifunktionellem oder höherfunktionellem Stoff, der sowohl Hydroxyl- als auch SH-Gruppen enthält, mit einem Molekulargewicht von weniger als oder gleich 700 g/mol und Mischungen davon, um ein Polyurethanprepolymer zu bilden, und
Umsetzen dieses Prepolymers mit
(c) Stoff ausgewählt aus Diol mit einem Molekulargewicht von weniger als oder gleich 200 g/mol, Dithiol mit einem Molekulargewicht von weniger als oder gleich 600 g/mol, difunktionellem Stoff, der sowohl Hydroxyl- als auch SH-Gruppen enthält, mit einem Molekulargewicht von weniger als oder gleich 600 g/mol und Mischungen davon, und
(d) Diamin,

wobei wenigstens einer von (a), (b) und (c) schwefelhaltig ist, oder
(II) Umsetzen in einem Ein-Topf-Verfahren von

(a) Stoff ausgewählt aus Polyisocyanat, Polyisothiocyanat oder Mischungen davon,
(b) Stoff ausgewählt aus trifunktionellem oder höherfunktionellem Polyol mit einem Molekulargewicht von weniger als oder gleich 200 g/mol, trifunktionellem oder höherfunktionellem Polythiol mit einem Molekulargewicht von weniger als oder gleich 700 g/mol, trifunktionellem oder höherfunktionellem Stoff, der sowohl Hydroxyl- als auch SH-Gruppen enthält, mit einem Molekulargewicht von weniger als oder gleich 700 g/mol und Mischungen davon,
(c) Stoff ausgewählt aus Diol mit einem Molekulargewicht von weniger als oder gleich 200 g/mol, Dithiol mit einem Molekulargewicht von weniger als oder gleich 600 g/mol, difunktionellem Stoff, der sowohl Hydroxyl- als auch SH-Gruppen enthält, mit einem Molekulargewicht von weniger als oder gleich 600 g/mol und Mischungen davon, und
(d) Diamin,

wobei wenigstens einer von (a), (b) und (c) schwefelhaltig ist.

## Revendications

**1.** Poly(uréthane) contenant du soufre comprenant le produit réactionnel de :

(a) une matière choisie parmi le poly(isocyanate), le poly(isothiocyanate) ou leurs mélanges ;
(b) une matière choisie parmi un polyol trifonctionnel ou de fonctionnalité supérieure ayant une masse moléculaire inférieure ou égale à 200 grammes/mole, un poly(thiol) trifonctionnel ou de fonctionnalité supérieure ayant une masse moléculaire inférieure ou égale à 700 grammes/mole, une matière trifonctionnelle ou de fonctionnalité supérieure comprenant à la fois des groupes hydroxyle et SH ayant une masse moléculaire inférieure ou égale à 700 grammes/mole, et leurs mélanges ; et
(c) une matière choisie parmi un diol ayant une masse moléculaire inférieure ou égale à 200 grammes/mole, un dithiol ayant une masse moléculaire inférieure ou égale à 600 grammes/mole, une matière difonctionnelle contenant à la fois des groupes hydroxyle et SH ayant une masse moléculaire inférieure ou égale à 600 grammes/mole, et leurs mélanges, dans lequel au moins l'une de (a), (b) ou (c) contient du soufre.

**2.** Poly(uréthane) contenant du soufre selon la revendication 1, dans lequel ledit dithiol dans (c) comprend un oligomère dithiol ayant une masse moléculaire moyenne en nombre inférieure ou égale à 600 grammes/mole, sous réserve que ledit oligomère dithiol constitue 70 pour cent en mole ou moins du réactif (c).

3. Procédé de préparation d'un poly(uréthane) contenant du soufre comprenant les étapes consistant à :

(I)

(a) faire réagir au moins un des éléments parmi le poly(isocyanate), au le poly(isothiocyanate) ou un mélange de ceux-ci avec au moins un des polyols trifonctionnels ou de fonctionnalité supérieure ayant une masse moléculaire inférieure ou égale à 200 grammes/mole, un poly(thiol) trifonctionnel ou de fonctionnalité supérieure ayant une masse moléculaire inférieure ou égale à 700 grammes/mole, une matière trifonctionnelle ou de fonctionnalité supérieure contenant à la fois des groupes hydroxyle et SH ayant une masse moléculaire inférieure ou égale à 700 grammes/mole, ou leurs mélanges ; afin de former un prépolymère poly(uréthane), et

(b) faire réagir ledit prépolymère avec au moins une matière active contenant de l'hydrogène choisie parmi un diol ayant une masse moléculaire inférieure ou égale à 200 grammes/mole, un dithiol ayant une masse moléculaire inférieure ou égale à 600 grammes/mole, une matière difonctionnelle contenant à la fois des groupes hydroxyle et SH ayant une masse moléculaire inférieure ou égale à 600 grammes/mole, ou leurs mélanges,

dans laquelle au moins l'un de (a) ou (b) contient du soufre ; ou

(II) faire réagir

(a) au moins une matière choisie parmi le poly(isocyanate), le poly(isothiocyanate) ou leurs mélanges :

(b) au moins une matière choisie parmi un polyol trifonctionnel ou de fonctionnalité supérieure ayant une masse moléculaire inférieure ou égale à 200 grammes/mole, un polythiol) trifonctionnel ou de fonctionnalité supérieure ayant une masse moléculaire inférieure ou égale à 700 grammes/mole, une matière trifonctionnelle ou de fonctionnalité supérieure ayant à la fois des groupes hydroxyle et SH ayant une masse moléculaire inférieure ou égale à 700 grammes/mole, ou leurs mélanges ; et

(c) au moins une matière choisie parmi un diol ayant une masse moléculaire inférieure ou égale à 200 grammes/mole, un dithiol ayant une masse moléculaire inférieure ou égale à 600 grammes/mole, une matière difonctionnelle contenant à la fois des groupes hydroxyle et SH ayant une masse moléculaire inférieure ou égale à 600 grammes/mole, ou leurs mélanges,

dans un processus monopot, dans lequel au moins l'une de (a), (b) ou (c) contient du soufre.

4. Poly(uréthane)(urée) contenant du soufre comprenant le produit réactionnel de :

(a) au moins l'un parmi le poly(isocyanate), le poly(isothiocyanate) ou leurs mélanges ;

(b) au moins l'un parmi un polyol trifonctionnel ou de fonctionnalité supérieure ayant une masse moléculaire inférieure ou égale à 200 grammes/mole, une matière trifonctionnelle ou de fonctionnalité supérieure contenant à la fois des groupes hydroxyle et SH ayant une masse moléculaire inférieure ou égale à 700 grammes/mole, un poly(thiol) trifonctionnel ou de fonctionnalité supérieure ayant une masse moléculaire inférieure ou égale à 700 grammes/mole, ou leurs mélanges ;

(c) au moins l'un parmi un diol ayant une masse moléculaire inférieure ou égale à 100 grammes/mole, un dithiol ayant une masse moléculaire inférieure ou égale à 600 grammes/mole, une matière difonctionnelle contenant à la fois des groupes hydroxyle et SH ayant une masse moléculaire inférieure ou égale à 600 grammes/mole, ou leurs mélanges ; et

(d) une diamine,

dans lequel au moins l'un de (a), (b) et (c) contient du soufre.

5. Poly (uréthane) (urée) contenant du soufre selon la revendication 4, dans lequel ledit dithiol dans (c) comprend un oligomère dithiol ayant une masse moléculaire moyenne en nombre inférieure ou égale à 600 grammes/mole, sous réserve que ledit oligomère dithiol constitue 70 pour cent en mole ou moins du réactif dans (c).

6. Poly(uréthane)(urée) contenant du soufre selon la revendication 4 préparé par les étapes consistant à :

(I) faire réagir (a) et (b) afin de former un prépolymère poly(uréthane) de préférence contenant du soufre dans lequel de préférence ledit prépolymère poly(uréthane) contenant du soufre comprend le produit réactionnel de :

(a) au moins l'un parmi un poly(isocyanate) et un poly(isothioayanate) ou leurs mélanges ; et

(b) au moins l'un parmi un polythiol trifonctionnel ou de fonctionnalité supérieure ou un mélange d'un poly (thiol) trifonctionnel ou de fonctionnalité supérieure et d'un polyol trifonctionnel ou de fonctionnalité supérieure et allonger la chaîne dudit prépolymère avec (c) et (d),
dans lequel (d) comprend en outre de façon facultative une matière choisie parmi une poly(amine) trifonctionnelle ou de fonctionnalité supérieure, un polyol trifonctionnel ou de fonctionnalité supérieure, un poly (thiol) trifonctionnel ou de fonctionnalité supérieure ayant une masse moléculaire inférieure ou égale à 700, une matière trifonctionnelle ou de fonctionnalité supérieure contenant à la fois des groupes hydroxyle et SH ayant une masse moléculaire inférieure ou égale à 700, et leurs mélanges ; ou

(II) faire réagir (a), (b), (c) et (d) dans un processus monopot.

**7.** Procédé de préparation de poly(uréthane)(urée) contenant du soufre, comprenant les étapes consistant à

(I) faire réagir

(a) une matière choisie parmi le poly(isocyanate), le poly(isothiocyanate) et leurs mélanges, et
(b) une matière choisie parmi un polyol tri fonctionnel ou de fonctionnalité supérieure ayant une masse moléculaire inférieure ou égale à 200 grammes/mole, un poly(thiol) trifonctionnel ou de fonctionnalité supérieure ayant une masse moléculaire inférieure ou égale à 700 grammes/mole, une matière trifonctionnelle ou de fonctionnalité supérieure contenant à la fois des groupes hydroxyle et SH ayant une masse moléculaire inférieure ou égale à 700 grammes/mole, et leurs mélanges, afin de former un prépolymère poly(uréthane) ; et
faire réagir ledit prépolymère avec
(c) une matière choisie parmi un diol ayant une masse moléculaire inférieure ou égale à 200 grammes/mole, un dithiol ayant une masse moléculaire inférieure ou égale à 600 grammes/mole, une matière difonctionnelle contenant à la fois des groupes hydroxyle et SH ayant une masse moléculaire inférieure ou égale à 600 grammes/mole, et leurs mélanges ; et
(d) une diamine,

dans lesquelles au moins l'une de (a), (b) et (c) contient du soufre, ou
(II) faire réagir dans un processus monopot :

(a) une matière choisie parmi le poly(isocyanate), le poly(isothiocyanate) ou leurs mélanges ;
(b) une matière choisie parmi un polyol trifonctionnel ou de fonctionnalité supérieure ayant une masse moléculaire inférieure ou égale à 200 grammes/mole, un poly(thiol) trifonctionnel ou de fonctionnalité supérieure ayant une masse moléculaire inférieure ou égale à 700 grammes/mole, une matière trifonctionnelle ou de fonctionnalité supérieure contenant à la fois des groupes hydroxyle et SH ayant une masse moléculaire inférieure ou égale à 700 grammes/mole, et leurs mélanges ;
(c) une matière choisie parmi un diol ayant une masse moléculaire inférieure ou égale à 200 grammes/mole, un dithiol ayant une masse moléculaire inférieure ou égale à 600 grammes/mole, une matière difonctionnelle contenant à la fois des groupes hydroxyle et SH ayant une masse moléculaire inférieure ou égale à 600 grammes/mole, et leurs mélanges : et
(d) une diamine,

dans lequel au moins l'une de (a), (b) et (c) contient du soufre.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 03044070 A
- WO 03042270 A
- WO 2004060951 A1
- US 6509418 B1
- WO 0166623 A1
- US 4810812 A
- US 6342571 B
- WO 03011925 A
- US 5693738 A


### Non-patent literature cited in the description


- Ullmann's Encyclopedia of Industrial Chemistry. 1992, vol. A21, 673-674